(19) Europäisches Patentamt
European Patent Office
Office européen des brevets

(11) EP 0 601 067 B1

(12) **EUROPEAN PATENT SPECIFICATION**

(45) Date of publication and mention of the grant of the patent: **18.12.1996 Bulletin 1996/51**

(21) Application number: **92918994.2**

(22) Date of filing: **21.08.1992**

(51) Int. Cl.[6]: **B01D 53/22**, B01D 67/00, B01D 71/50

(86) International application number: **PCT/US92/07125**

(87) International publication number: **WO 93/03821 (04.03.1993 Gazette 1993/06)**

# (54) SEMI-PERMEABLE GAS SEPARATION MEMBRANES HAVING NON-IONIC SURFACTANTS DISPOSED ON A MEMBRANE SURFACE OR WITHIN MEMBRANE STRUCTURE AND PROCESSES FOR MAKING AND USING THE SAME

HALBDURCHLÄSSIGE GASTRENNUNGSMEMBRANEN, DIE NICHTIONISCHE, OBERFLÄCHENAKTIVE MITTEL HABEN, DIE AUF EINER MEMBRANOBERFLÄCHE ODER INNERHALB EINER MEMBRAN ANGEORDNET SIND UND VERFAHREN ZU IHRER HERSTELLUNG UND VERWENDUNG

MEMBRANES SEMI-PERMEABLES DE SEPARATION DE GAZ COMPRENANT DES AGENTS TENSIO-ACTIFS NON IONIQUES DISPOSES SUR UNE SURFACE DE MEMBRANE OU DANS LA STRUCTURE MEMBRANEUSE, ET PROCEDES DE FABRICATION ET D'UTILISATION

(84) Designated Contracting States:
**AT BE CH DE DK ES FR GB GR IT LI MC NL SE**

(30) Priority: **22.08.1991 US 748493**
**22.08.1991 US 749002**
**10.07.1992 US 911444**

(43) Date of publication of application:
**15.06.1994 Bulletin 1994/24**

(73) Proprietor: **MG GENERON, INC.**
**Malvern, Pennsylvania 19355 (US)**

(72) Inventors:
- **JENSVOLD, John, A.**
**Benicia, CA 94510 (US)**
- **CHENG, Tsungnan**
**San Ramon, CA 94583 (US)**
- **SCHMIDT, Donald, L.**
**Midland, MI 48640 (US)**

(74) Representative: **Casalonga, Axel et al**
**BUREAU D.A. CASALONGA - JOSSE**
**Morassistrasse 8**
**80469 München (DE)**

(56) References cited:
**WO-A-85/04111**
**US-A- 4 955 993**
**US-A- 4 962 131**
**US-A- 5 000 763**
**US-A- 5 032 149**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 601 067 B1

## Description

This invention relates to a semi-permeable asymmetric gas separation membrane which possesses improved resistance to thermal compaction or aging. The invention further relates to processes for making and using such a membrane.

In various industries, it is necessary or desirable to separate one gaseous component from other gaseous components in a gas mixture. Processes used to perform such separations include cryogenics, pressure swing adsorption, and membrane separations.

Membranes have been used to recover, remove, isolate, or separate a variety of gases, including hydrogen, helium, oxygen, nitrogen, carbon monoxide, carbon dioxide, water vapor, hydrogen sulfide, ammonia, and/or light hydrocarbons, from a mixture of gases. Applications of particular interest include the separation of air into an enriched oxygen stream, which is useful, for example, for increasing the efficiency of fermentation processes and for enhancing combustion processes, and an enriched nitrogen stream, which is useful, for example, for inert padding of flammable fluids and for increasing food storage times. Other applications of interest include the separation of hydrogen or helium from gas mixtures containing gases such as nitrogen, carbon monoxide, carbon dioxide, and/or light hydrocarbons in addition to hydrogen or helium. For example, the separation and recovery of hydrogen or helium for recycle is often necessary in various hydrocracker, hydrotreater, and catalytic cracking processes used in the oil refinery industry. Membranes can be used to achieve such separations.

Such membrane separations are based on the relative permeabilities of two or more gaseous components through the membrane To separate a gas mixture into two portions, one richer and one leaner in at least one gaseous component, the mixture is brought into contact with one side of a semi-permeable membrane through which at least one of the gaseous components selectively permeates. A gaseous component which selectively permeates through the membrane passes through the membrane more rapidly than at least one other gaseous component of the gas mixture. The gas mixture is thereby separated into a stream which is enriched in the selectively permeating gaseous component or components and a stream which is depleted in the selectively permeating gaseous component or components. The stream which is depleted in the selectively permeating gaseous component or components is enriched in the relatively non-permeating gaseous component or components. A relatively non-permeating gaseous component permeates more slowly through the membrane than at least one other gaseous component of the gas mixture. An appropriate membrane material is chosen for the gas mixture so that some degree of separation of the gas mixture can be achieved.

Membranes for gas separation have been fabricated from a wide variety of polymeric materials, including cellulose esters, aromatic polyimides, polyaramides, polysulfones, polyethersulfones, polyphenylene oxides, polyesters, polycarbonates, and polyestercarbonates. An ideal gas separation membrane is characterized by the ability to operate under high temperatures and/or pressures while possessing a high gas separation factor (selectivity) and high gas permeability. The problem is finding membrane materials which possess all the desired characteristics. Polymers possessing high gas separation factors generally have low gas permeabilities, while those polymers possessing high gas permeabilities generally have low gas separation factors. In the past, a choice between a high separation factor and a high gas permeability has been unavoidably necessary.

Many of the membrane materials previously used exhibit poor separation performance at high operating temperatures and/or pressures. Furthermore, many asymmetric membranes previously used suffer from the disadvantage of decreasing separation performance over time, especially when exposed to or used under conditions of high temperature and/or pressure. In particular, the phenomenon of thermal compaction has been a significant problem experienced with many conventional asymmetric gas separation membranes. Thermal compaction, also sometimes described as a thermal aging process, results from exposure of the asymmetric membrane structure to heat over a period of time. Such exposure frequently brings about a partial collapse of pores, channels, and voids present in the asymmetric membrane porous support structure, resulting in a loss of pore surface area, particularly the surface area of smaller pores in the range of from about 10 Angstroms to about 500 Angstroms, which causes the overall asymmetric membrane structure to become more dense or compact. Such compacted membranes generally exhibit a significant loss in gas flux, as well as an accompanying increase in gas selectivity. The higher gas selectivity of the compacted membrane generally does not make up for the greatly reduced gas flux, resulting in lower productivity, a less efficient separation of gases, and greater capital and operating costs required to achieve the desired separation.

What is needed is a membrane capable of separating a gaseous component from at least one other gaseous component in a gas mixture which possesses high selectivity, adequate gas permeability, and ability to operate under conditions of high temperature and/or pressure. Furthermore, what is also needed is a gas separation membrane with improved resistance to thermal compaction or thermal aging.

The invention is a semi-permeable gas separation membrane comprising at least one discriminating region and at least one porous region, wherein said discriminating region functions to selectively separate at least one gaseous component from at least one other gaseous component in a gas mixture, wherein said discriminating region and said porous region are comprised of the same polymeric material, wherein said porous region comprises a plurality of pores having

an effective average pore size in the range of up to about 500 Angstroms, in one aspect said membrane contains a non-ionic surfactant having a molecular weight of between about 200 and about 10,000 and an HLB value of between about 6.0 and about 18.0, wherein said membrane exhibits at least about a 10 percent improvement in compaction rate as measured with air at about 50°C and about 1030 kPa (135 psig) for about 720 hours.

In another aspect, the foregoing invention comprises the membrane of the polymeric material having a non-ionic surfactant disposed on at least one surface of said membrane, wherein said non-ionic surfactant is characterized by an HLB value of between about 8.0 and about 17.0; wherein said membrane exhibits a gas selectivity for oxygen/nitrogen at about 25°C of at least about 7.0 and a recovery based on air as the feed gas with about 1.0 percent oxygen in the non-permeate of at least about 38 percent at about 25°C.

The invention is also a process for separating at least one gaseous component from at least one other gaseous component in a gas mixture comprising:

(A) contacting one side of a semi-permeable gas separation membrane with a feed gas mixture under pressure, wherein said membrane separates a higher pressure region on one side of the membrane from a lower pressure region on the opposite side of said membrane;
(B) maintaining a pressure differential across said membrane under conditions such that at least one gaseous component in the feed gas mixture selectively permeates through the membrane from the higher pressure region to the lower pressure region;
(C) removing from the lower pressure region permeated gas which is enriched in at least one gaseous component; and
(D) removing from the higher pressure region non-permeated gas which is depleted in at least one gaseous component;

wherein said membrane comprises at least one discriminating region and at least one porous region, wherein said discriminating region functions to selectively separate at least one gaseous component from at least one other gaseous component in a gas mixture, wherein said discriminating region and said porous region are comprised of the same polymeric material, wherein said porous region comprises a plurality of pores having an effective average pore size in the range of up to about 500 Angstroms, where in one aspect said membrane contains a non-ionic surfactant having a molecular weight of between about 200 and about 10,000 and an HLB value of between about 6.0 and about 18.0, wherein said membrane exhibits at least about a 10 percent improvement in compaction rate as measured with air at about 50°C and about 135 psig for about 720 hours.

In another aspect, the invention comprises the process for separating at least one gaseous component from at least one other gaseous component wherein there is a non-ionic surfactant disposed on at least one surface of said membrane, wherein said non-ionic surfactant is characterized by an HLB value of between about 8.0 and about 17.0; wherein said membrane exhibits a gas selectivity for oxygen/nitrogen at about 25°C of at least about 7.0 and a recovery based on air as the feed gas with about 1.0 percent oxygen in the non-permeate of at least about 38 percent at about 25°C.

In another aspect, the invention is a process for preparing a semi-permeable gas separation membrane comprising:

(A) forming a mixture comprising:

(i) at least one polymeric material which is capable of being formed into a membrane,
(ii) at least one solvent for said polymeric material, and
(iii) at least one non-ionic surfactant which has a molecular weight between about 200 and about 10,000 and an HLB value of between about 6.0 and about 18.0, and
(iv) optionally, at least one non-solvent for said polymeric material;

(B) heating said mixture to a temperature at which said mixture forms a fluid and possesses sufficient viscosity at extrusion or casting conditions to permit fabrication of a membrane;
(C) extruding or casting said fluid into a membrane;
(D) passing said membrane through at least one gaseous quench zone under conditions such that said mixture cools and begins to phase separate;
(E) passing said membrane through at least one liquid quench zone comprising a liquid in which said polymeric material possesses low solubility, wherein at least a portion of said solvent and optional non-solvent is removed from said membrane; and
(F) simultaneously or consecutively passing said membrane through at least one liquid leach zone comprising a liquid in which said polymeric material possesses low solubility, wherein a substantial portion of the remaining solvent and optional non-solvent is removed from said membrane;

wherein said membrane so formed possesses at least one discriminating region and at least one porous region, wherein said discriminating region functions to selectively separate at least one gaseous component from at least one other gaseous component in a gas mixture, wherein said discriminating region and said porous region are comprised of the same polymeric material, wherein said porous region comprises a plurality of pores having an effective average pore size in the range of up to about 500 Angstroms, wherein said membrane contains the non-ionic surfactant, and wherein said membrane exhibits at least about a 10 percent improvement in compaction rate as measured with air at about 50°C and about 1030 kPa (135 psig) for about 720 hours.

In another aspect, the invention is a process for preparing a semi-permeable gas separation membrane comprising:

(A) forming a mixture comprising:

(i) at least one polymer selected form the group consisting of polycarbonate, polyester, polyestercarbonate, and a combination thereof,
(ii) at least one solvent for said polymer, and
(iii) optionally, at least one non-solvent for said polymer;

(B) heating said mixture to a temperature at which said mixture forms a fluid and possesses sufficient viscosity at extrusion or casting conditions to permit fabrication of a membrane;
(C) extruding or casting said fluid into a membrane;
(D) passing said membrane through at least one gaseous quench zone under conditions such that said mixture cools and begins to phase separate;
(E) passing said membrane through at least one liquid quench zone comprising a liquid in which said polymer possesses low solubility, wherein at least a portion of said solvent and optional non-solvent is removed from said membrane;
(F) simultaneously or consecutively passing said membrane through at least one liquid leach zone comprising a liquid in which said polymer possesses low solubility, wherein a substantial portion of the remaining solvent and optional non-solvent is removed from said membrane; and
(G) contacting at least one surface of said membrane with a non-ionic surfactant which possesses an HLB value of between about 8.0 and about 17.0;

wherein said membrane so formed comprises at least one discriminating region and at least one porous region, wherein said discriminating region functions to selectively separate at least one gaseous component from at least one other gaseous component in a gas mixture; wherein said porous region comprises a plurality of pores having an effective average pore size in the range of up to about 500 Angstroms, and wherein said membrane exhibits a gas selectivity for oxygen/nitrogen at about 25°C of at least about 7.0 and a recovery based on air as the feed gas of at least about 38 percent at about 25°C with about 1.0 percent oxygen in the non-permeate.

The membranes of this invention demonstrate surprisingly high gas separation factors and adequate gas fluxes for the separation of at east one gaseous component from at least one other gaseous component in a gas mixture. In particular, the membranes of this invention are useful for the separation of hydrogen or helium from gas mixtures containing hydrogen or helium, as well as for the separation of oxygen and nitrogen from air. Furthermore, the membranes of this invention possess good mechanical properties and improved resistance to thermal compaction or aging.

The membranes of this invention have at least one discriminating region and at least one generally porous region, wherein the discriminating region functions to selectively separate at least one gaseous component from at least one other gaseous component in a gas mixture, wherein the discriminating region and porous regions are comprised of the same polymeric material.

The membrane may be in the form of a film or sheet, or a hollow fiber of various cross-sectional shapes. Preferably, in the case of a hollow fiber membrane, the hollow fiber possesses a substantially circular or elliptical cross-sectional shape. In the embodiments wherein the membrane is a hollow fiber, the discriminating region may occur at or in the vicinity of the outside external surface, at or in the vicinity of the inside internal surface, at some region internal to both the external and internal surfaces, or a combination thereof. In one embodiment, the hollow fiber membrane comprises a discriminating region at or near the internal surface of the hollow fiber membrane and a generally porous region extending from the discriminating region to the external surface of the hollow fiber membrane. In another embodiment, the hollow fiber membrane comprises a generally porous region at or near the external surface of the hollow fiber membrane, a generally porous region at or near the internal surface of the hollow fiber membrane, and a discriminating region generally situated between the two porous surface regions. The discriminating region in the hollow fiber membranes of this invention functions to selectively separate at least one gaseous component from at least one other gaseous component in the feed gas mixture. The discriminating region in such membranes may be a dense region, a region of non-continuous porosity, or a region resembling a closed cell foam.

The generally porous region or regions in the membranes of this invention are capable of passing the gas mixture to be separated through such porous region or regions without appreciably inhibiting the transport of the gas mixture therethrough; that is, the porous region or regions present minimal resistance to the transport of the gas mixture therethrough. Within the porous region or regions, a substantial majority of the pores have a pore size preferably between 10 Angstroms and 500 Angstroms, more preferably between 10 Angstroms and 200 Angstroms, even more preferably between 20 Angstroms and 200 Angstroms, most preferably between 20 Angstroms and 150 Angstroms. Substantial majority as used herein means that preferably at least 60 percent, more preferably at least 75 percent, even more preferably at least 90 percent of the pores within the porous region possess a size within the indicated range.

The non-ionic surfactants useful in this invention have a molecular weight of between 200 and 10,000, preferably of between 300 and 5,000, more preferably of between 350 and 3,000. The non-ionic surfactants preferably do not undergo appreciable volatilization or decomposition at temperatures of up to about 150°C to about 300°C. The non-ionic surfactants useful in this invention have an HLB, that is, hydrophile-lipophile balance, value of between 6.0 and 18.0, preferably between 8.25 and 16.0, more preferably between 8.5 and 15.0. The HLB values of non-ionic surfactants are generally available from the manufacturer and/or are compiled in handbooks such as McCutcheon's Emulsifiers and Detergents, North American Edition, McCutcheon Division, MC Publishing Co., New Jersey, 1984. HLB values may be based on experimental emulsification data or calculated from the structure of the surfactant molecule. See Rosen, Surfactants And Interfacial Phenomena, 2nd Edition, John Wiley and Sons, New York, New York, 1989, Griffin "Calculation of HLB Values of Non-Ionic Surfactants", Journal of the Society of Cosmetic Chemists, 1954, pp. 249-256, and Griffin, "Classification of Surface-Active Agents by 'HLB'," Journal of the Society of Cosmetic Chemists, 1949,
pp. 311-326. The non-ionic surfactants useful in this invention preferably include polyoxyethylenated alkyl phenols (alkylphenol ethoxylates), polyoxyethylenated straight chain alcohols (alcohol ethoxylates), polyoxyethylenated polyoxypropylene glycols, alkyl poly(ethylene glycol) ethers, and fluorinated non-ionic surfactants, more preferably alkylphenol ethoxylates and fluorinated non-ionic surfactants. Preferred initiator compounds for ethoxylation include p-nonylphenol, p-octylphenol, and p-dodecylphenol. Examples of preferred non-ionic surfactants include TERGITOL NP-4, 6, 7, and 10 nonylphenol polyethylene glycol ether non-ionic surfactant, available from Union Carbide, ZONYL FSO-100 fluorochemical surfactant, available from duPont, and TRITON X-100 and X-405 octylphenol ethoxylate (ethoxylated alkyl phenol) non-ionic surfactants, available from Union Carbide.

For embodiments wherein non-ionic surfactant is disposed on at least one membrane surface, the solution containing surfactant may comprise a liquid in which the surfactant at least partially dissolves and which does not deleteriously affect the physical integrity of the membrane. The liquid containing the surfactant is preferably one which does not swell the membrane. Preferred liquids include water. The solution contains an amount of surfactant effective to impart the desired recover and selectivity in the treated membrane. The solution preferably contains non-ionic surfactant in an amount between 1 ppm and 2000 ppm, more preferably between 5 ppm and 1000 ppm, even more preferably between 5 ppm and 500 ppm. The temperature at which the membrane is contacted is that temperature which does not deleteriously affect the membrane, preferably between 5°C and 50°C, even more preferably between 15°C and 30°C. Ambient temperatures are generally convenient and sufficient. The membrane is contacted with the non-ionic surfactant for a period of time sufficient to deposit an amount of the non-ionic surfactant sufficient to impart improved gas selectivity and recovery characteristics in the treated membrane compared to the untreated membrane. Preferably the contact time is between 1 minute and 2 hours, more preferably between 30 minutes and 1 hour. Generally, as the contact time is increased, the concentration of non-ionic surfactant in the solution may be decreased while still achieving comparable results. The non-ionic surfactant may be disposed upon the surface of the membrane as a substantially uniform layer or coating, or as a residue of closely spaced discrete particles or agglomerations. The non-ionic surfactant preferably does not substantially intrude into the porous regions of the membrane. In the embodiment wherein hollow fiber membranes are used, the membranes may be contacted with the non-ionic surfactant solution by contacting the shellside of the membrane, the tubeside of the membrane, or a combination thereof, with the solution.

Following contacting with the non-ionic surfactant solution, the membrane is preferably contacted with a rinsing agent to remove excess surfactant. The rinsing agent may be any liquid which removes excess surfactant and which does not deleteriously affect the physical integrity of the membrane. Water is a convenient and sufficient rinsing agent. The temperature at which the membrane is rinsed is that which does not deleteriously affect the physical integrity of the membrane, preferably between 5°C and 50°C. Ambient temperatures are generally convenient and sufficient.

The presence of the non-ionic surfactant on the membrane surface may be detected by known analytical surface chemistry techniques such as Secondary Ion Mass Spectrometry (SIMS) or measurement of fluorescence.

The membranes of this invention are prepared from hydrophobic polymeric materials which possess an equilibrium water content at 25°C as measured by ASTM D-570-81 of less than 1 weight percent, preferably of less than 0.75 weight percent, more preferably of less than 0.50 weight percent. Especially preferred hydrophobic polymeric materials include those which possess an equilibrium water content at 25°C as measured by ASTM D-570-81 of less than 0.35 weight percent. Hydrophobic polymeric materials useful in this invention include polycarbonates, polyesters, polyestercarbonates, polysulfones, polyolefins, poly-phenylene oxides, polyphenylene sulfides, polyethers, fluorinated polyimides, polystyrenes, polyetherketones, polyetheretherketones, polyetherimides, and polyamide-imides; preferably polycarbonates, polyphenylene oxides, polysulfones, polyestercarbonates, polyesters, fluorinated polyimides, polyetheretherketones, and polyetherketones; more preferably polycarbonates, polyesters, polyestercarbonates, polyphenylene oxides, and polysulfones; most preferably polycarbonates, polyesters, and polyestercarbonates.

The polymeric materials useful in this invention generally are commercially available or may be synthesized via conventional polymerization techniques. The polymeric materials useful in this invention should be polymerized to the extent that the polymeric material will form a membrane with sufficient mechanical strength to withstand use conditions. The polymeric materials preferably possess a weight-average molecular weight of 40,000 or greater, more preferably of 60,000 or greater.

A preferred class of polycarbonates, polyestercarbonates, and polyesters useful in this invention include polymers derived from unsubstituted or substituted bisphenols. Polycarbonates, polyester-carbonates, and polyesters substantially derived from substituted bisphenols are preferred. In such substituted bisphenolic polymers, the substituents may occur on the phenolic rings, on the bridging group, or a combination thereof. Such phenolic and bridging group substituents preferably include $C_{1-6}$ alkyl, $C_{1-4}$ haloalkyl, and $C_{1-4}$ alkoxy monovalent radicals and halogens such as chlorine, bromine, and fluorine. Preferably, a significant portion of the bisphenols used to prepare the polymers are tetra-substituted on the phenolic ring; more preferably, the tetra-substituents are situated in the 3,5-positions on the aromatic or phenolic rings.

Preferably, at least 25 weight percent, more preferably at least 50 weight percent, even more preferably at least 75 weight percent of the bisphenol moieties in the polycarbonate, polyester-carbonate, or polyester backbone are tetrahalogenated on the phenolic ring. Polycarbonates, polyesters, and polyestercarbonates which are especially preferred include those in which about 100 weight percent of the bisphenol moieties are tetrahalogenated on the phenolic rings. Examples of especially preferred polycarbonates in which about 100 weight percent of the bisphenol moieties are tetrahalogenated include 2,2-bis-(3,5-dibromo-4-hydroxyphenyl)propane and 2,2-bis(3,5-dichloro-4-hydroxyphenyl)propane.

The polycarbonates, polyestercarbonates, and polyester polymers useful in this invention preferably comprise a polymer backbone structure containing repeat units corresponding to Formula I:

FORMULA I

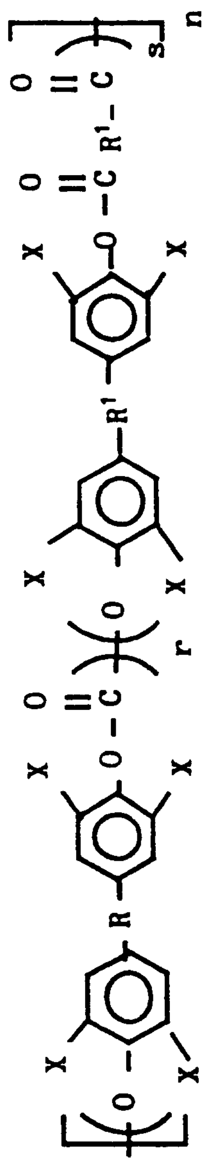

wherein

R is independently in each occurrence selected from the group consisting of a direct bond, -CO-, $CO_2$-, -S-, -$SO_2$-, -SO-, -O-, a $C_{1-12}$ divalent halocarbon radical, and an inertly substituted $C_{1-12}$ divalent hydrocarbon radical;
$R^1$ is independently in each occurrence selected from the group consisting of an inertly substituted $C_{1-18}$ divalent hydrocarbon radical, and a $C_{1-18}$ divalent halocarbon radical;
X is independently in each occurrence selected from the group consisting of hydrogen, a halogen, a $C_{1-6}$ alkyl, a $C_{1-4}$ haloalkyl, and a $C_{1-4}$ alkoxy;
r is a positive real number between 0 and 1 inclusive;
s is a positive real number between 0 and 1 inclusive; and
n is a positive real number, such that the polymeric material possesses sufficient molecular weight to prepare a membrane with suitable characteristics.

In Formula I, R is independently in each occurrence preferably a direct bond, -CO-, -$CO_2$-, -S-, -SO-, -$SO_2$-, -O-, a $C_{1-8}$ divalent hydrocarbon radical, a $C_{1-8}$ divalent halocarbon radical, or an inertly substituted $C_{1-8}$ divalent hydrocarbon radical; R is independently in each occurrence more preferably a direct bond, a $C_{1-6}$ divalent hydrocarbon radical, a $C_{1-6}$ divalent halocarbon radical, or an inertly substituted divalent hydrocarbon radical.

R is independently in each occurrence even more preferably a $C_{1-3}$ divalent hydrocarbon radical, a $C_{1-3}$ divalent

halocarbon radical, or an inertly substituted $C_{1-3}$ divalent hydrocarbon radical. Preferred divalent halocarbon radicals include divalent chloro-, bromo-, and fluoro-carbon radicals. Inertly substituted as used herein refers to substituents which do not result in undesired reactions or properties in the membrane prepared therefrom. The divalent hydrocarbon radical may be aliphatic, alicyclic, or aromatic.

In Formula I, $R^1$ is independently in each occurrence preferably an unsubstituted or halo-substituted $C_{1-12}$ divalent aliphatic hydrocarbon radical, an unsubstituted or halo-substituted $C_{5-18}$ divalent cycloaliphatic hydrocarbon radical, or an unsubstituted or halo-substituted $C_{6-18}$ divalent aromatic hydrocarbon radical.

In Formula I, X is independently in each occurrence preferably hydrogen, a halogen, a $C_{1-4}$ alkyl, or a $C_{1-4}$ alkoxy; more preferably X is independently in each occurrence hydrogen, chlorine, bromine, fluorine, methyl, ethyl, methoxy, or ethoxy. X is independently in each occurrence even more preferably chlorine, bromine, fluorine, or methyl and most preferably chlorine, bromine, or fluorine.

The ratio of ester to carbonate groups, that is, the value of s/r, in the polyestercarbonate polymers is preferably from 0.005 to 200, more preferably from 0.01 to 100, even more preferably from 0.10 to 90, most preferably from about 0.20 to 80.

n is preferably a positive real number of at least 10, more preferably of at least 25, even more preferably of at least 50; n is preferably less than 250, more preferably less than 200, even more preferably less than 150.

The polycarbonates, polyestercarbonates, and polyesters useful in this invention can be prepared by any process known in the art which prepares polymers with suitable properties for membrane formation. See U.S. Patents 2,465,319; 2,999,835; 3,028,364; 3,028,365; 3,030,331; 3,038,874; 3,047,539; 3,119,787; 3,153,008; 3,169,121; 3,207,814; 3,248,366; 3,317,464; 3,334,154; 3,409,704; 3,780,148; 3,824,213; 3,829,266; 3,912,687; 3,948,856; 4,137,128; 4,156,069; 4,194,038; 4,255,556; 4,310,652; 4,311,822; and 4,413,103. See also Kirk-Othmer Encyclopedia of Chemical Technology, 3rd edition, Vol. 18, John Wiley & Sons, New York, New York, 1982, pp. 479-494 and 531-593 and Encyclopedia of Polymer Science & Technology, Vol. 10, John Wiley & Sons, New York, New York, 1969, pp. 714-725.

The polycarbonates, polyestercarbonates, and polyesters useful in this invention should be polymerized to the extent that the polymers will form a membrane with sufficient mechanical strength under intended operating conditions. Preferably, the polycarbonates, polyestercarbonates, and polyesters have a number-average molecular weight of at least about 2,000 and a number-average molecular weight of less than about 75,000. Such polymers preferably possess an inherent viscosity in methylene chloride of at least about 0.30 dL/gram and an inherent viscosity in methylene chloride of less than about 1.35 dL/gram.

The solvent used to prepare the membranes of this invention may be any solvent or mixture of solvents for the polymeric material which dissolves enough of the polymeric material so as to form a solution viscous enough to be extrudable or castable at the membrane fabrication temperature. The amount of solvent used depends upon the polymeric material used, the optional non-solvent used, the desired properties of the membrane, and the method of quenching and/or leaching the membrane. A solvent dissolves at least 5 weight percent of the polymeric material at the extrusion or casting temperature. Preferably the solvent dissolves at least 10 weight percent of the polymeric material at the extrusion or casting temperature, more preferably at least 25 weight percent of the polymeric material at the extrusion or casting temperature. The particular solvents useful for each polymeric material are well known to those skilled in the art or readily ascertainable by those skilled in the art via conventional solubility test methods.

The following solvents are generally preferred for use in this invention. The glycol ethers preferred as solvents include those glycol ethers corresponding to the formula $R^3O\text{-}(CH_2CH_2O)_d\text{-}R^3$ wherein $R^3$ is methyl or ethyl, and d is an integer of between 1 and 20 Preferably d is an integer of between 1 and 10, more preferably between 1 and 4, even more preferably when $R^3$ is methyl d is between 1 and 4 and when $R^3$ is ethyl d is between 2 and 4. Examples of such glycol ethers include ethylene glycol dimethyl ether, diethylene glycol dimethyl ether, and bis(2-methoxyethyl ether). Dialkyl ketones preferred as solvents include dimethyl ketone, diethyl ketone, and methyl ethyl ketone. Substituted morpholines preferred as solvents include those morpholines with a $C_{1-10}$ alkyl, formyl, or $C_{1-10}$ alkanoyl moiety substituted on the nitrogen atom, more preferred are substituted morpholines with a $C_{1-4}$ alkyl, formyl, or $C_{1-4}$ alkanoyl moiety substituted on the nitrogen atom. Examples of such substituted morpholines include N-formylmorpholine and N-ethylmorpholine. Preferred pyrrolidinones useful as solvents include pyrrolidinone, N-methyl-2-pyrrolidinone, N-ethyl-2--pyrrolidinone, N-cyclohexyl-2-pyrrolidinone, N-benzyl--2-pyrrolidinone, and N-phenyl-2-pyrrolidinone, with N-methyl-2-pyrrolidinone and N-ethyl-2-pyrrolidinone being more preferred, and N-methyl-2-pyrrolidinone being even more preferred. The term pyrrolidinone as used herein refers to compounds named as pyrrolidinones and pyrrolidones. Preferred substituted benzenes useful as solvents include those benzenes corresponding to the formula:

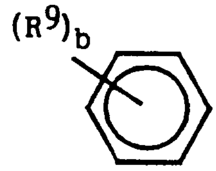

wherein $R^9$ is $C_{1-4}$ alkoxycarbonyl, nitro, halo, or a formyl moiety; and b is an integer of about 1 to 6, with the proviso that wherein $R^9$ is alkoxycarbonyl, b is 1. The preferred halogens are chlorine and bromine, with chlorine being more preferred. Preferably b is between about 1 and about 3. Examples of substituted benzenes preferred as solvents include chlorobenzene, dichlorobenzene, benzaldehyde, nitrobenzene, ethyl benzoate, methyl benzoate, and 1,2,4-trichlorobenzene.

For polycarbonates, polyestercarbonates, and polyesters, more preferred solvents comprise N-methyl-2-pyrrolidinone, tetrahydrofuran, ethylene glycol dimethylether, diethylketone, N-ethylmorpholine, dimethylformamide, cyclohexanone, bis(2-methoxyethylether), N,N-dimethylacetamide, acetophenone, methylene chloride, sulfolane, or mixtures thereof; even more preferred solvents comprise N-methyl-2-pyrrolidinone, ethylene glycol dimethylether, tetrahydrofuran, diethylene glycol dimethylether, acetophenone, methylene chloride, cyclohexanone, or mixtures thereof; a most preferred solvent is N-methyl-2-pyrrolidinone. See also U.S. Patent 4,962,131.

For fluorinated polyimides, more preferred solvents include N-methyl-2-pyrrolidinone, dimethyl-acetamide, dimethylformamide, and dimethylsulfoxide.

For polysulfone, more preferred solvents include methylene chloride, chloroform, N-methyl-2--pyrrolidinone, sulfolane, dimethylsulfoxide, dimethylacetamide, and dimethylformamide.

For polyphenylene oxide, more preferred solvents include methylene chloride, chloroform, toluene, benzene, caprolactam, and N-methyl-2--pyrrolidinone.

For more preferred solvents for polyetheretherketone and polyetherketone, see U.S. Patents 5,057,600 and 5,043,112.

The optional non-solvent useful for preparing the membranes of this invention may be any compound or mixture of compounds which do not substantially dissolve at the membrane fabrication temperature the polymeric material, which are soluble in the solvent, and which aid in the formation of pores in the polymer rich phase when the mixture is extruded or cast into a quench zone. Preferably the non-solvent dissolves less than 5 weight percent of the polymeric material present at the extrusion or casting temperature. The amount of non-solvent used depends upon the polymeric material used, the solvent used, the desired properties of the membrane, and the method of quenching and/or leaching the membrane. The particular non-solvents useful for each polymeric material are well known to those skilled in the art or readily ascertainable by those skilled in the art.

The following non-solvents are preferred. The glycols and glycol ethers useful as non-solvents include those glycols and glycol ethers corresponding to the formula $R^4O-(CH_2CH_2O)_q-R^4$ wherein $R^4$ is independently in each occurrence hydrogen or $C_{1-4}$ alkyl, and q is an integer of about 1 to about 250. Preferably $R^4$ is hydrogen. Preferably q is an integer of about 2 to about 100, more preferably of about 3 to about 60, and even more preferably of about 3 to about 15. Examples of preferred glycols and glycol ethers include 2-ethoxy-ethanol, polyethylene glycols with molecular weights of up to about 1450, triethylene glycol, diethylene glycol, diethylene glycol dibutylether. Esters useful as non-solvents include those esters corresponding to the formula $R^5COOR^6$ wherein $R^5$ is hydrogen or $C_{1-19}$ alkyl, and $R^6$ is $C_{1-10}$ alkyl. Preferably $R^5$ is hydrogen or $C_{1-4}$ alkyl, and $R^6$ is $C_{1-4}$ alkyl. Even more preferably, $R^6$ is ethyl or methyl. Examples of preferred esters include methyl formate, ethyl formate, methyl acetate, n-octyl acetate, methyl laurate, methyl myristate, butyl stearate, and methyl stearate. Preferred alkanols useful as non-solvents include methanol, ethanol, 2-propanol, and 1-hexanol. Preferred cyclohexanes useful as non-solvents include those which are unsubstituted or substituted with a $C_{1-10}$ alkyl, $C_{3-10}$ cycloalkyl, or $C_{1-4}$ perfluoroalkyl moiety. More preferred cyclohexanes useful as non-solvents include those which are unsubstituted or substituted with a $C_{1-4}$ alkyl, $C_{5-6}$ cycloalkyl, or trifluoromethyl moiety. Examples of such cyclohexanes include cyclohexane, methylcyclohexane, isopropylcyclohexane, t-butylcyclohexane, and dicyclohexyl. Preferred $C_{5-20}$ alkanes useful as non-solvents include hexane, dodecane, and hexadecane. Preferred dialkyl ketones useful as non-solvents include those ketones wherein one of the alkyl moieties is $C_{3-10}$ and the other is $C_{1-10}$. Examples of preferred dialkyl ketones useful for non-solvents include methyl isobutyl ketone, and diisopropyl ketone. Preferred amides useful as non-solvent include those amides corresponding to the formula $R^7CONHR^8$ wherein $R^7$ is preferably hydrogen or $C_{1-3}$ alkyl, and $R^8$ is preferably $C_{1-4}$ alkyl. Examples of preferred amides include N-methyl formamide and N-methyl acetamide. Preferred nitriles for use as non-solvents include acetyl and $C_{1-3}$ alkyl nitriles Examples of preferred nitriles include acetonitrile and propionitrile. Preferred aldehydes include $C_{1-4}$ alkyl aldehydes, with butyraldehyde even more preferred. Preferred substituted benzenes include formyl, alkyl, and cycloalkyl substituted benzenes corresponding to the formula:

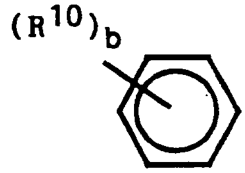

wherein $R^{10}$ is $C_{1-10}$ alkyl, $C_{3-10}$ cycloalkyl, or formyl, and b is as defined hereinbefore. Preferably $R^{10}$ is $C_{1-4}$ alkyl, $C_{5-6}$ cycloalkyl, or formyl.

Preferred non-solvents comprise triethylene glycol, 2-ethoxyethanol, diethylene glycol dibutyl ether, polyethylene glycols with molecular weights of up to 1450, diethylene glycol, dodecane, hexadecane, cyclohexane, methylcyclohexane, perchloroethylene, diisopropylketone, isopropylketone, isopropylcyclo-hexane, t-butylcyclo-hexane, N-methylformamide, decylene, N-methylacetamide, tetralin, dicyclohexyl, cyclohexyl benzene, carbon tetrachloride, water, or mixtures thereof. More preferred non-solvents comprise water, diisopropyl-ketone, tetraethylene glycol dimethylether, diethylene glycol dibutyl ether, hexadecane, diethylene glycol, triethylene glycol, polyethylene glycol with molecular weights of up to 1450, 2-ethoxyethanol, carbon tetrachloride, dodecane, or mixtures thereof. Even more preferred non-solvents are triethylene glycol and polyethylene glycols with molecular weights of up to about 400.

Certain solvents and non-solvents may cause degradation of the polymeric material if the polymer, solvent, and optional non-solvent mixture is maintained at elevated temperatures for extended periods of time. The solvent and non-solvent should be chosen to minimize degradation of the polymeric material at the extrusion temperatures. The solvent and non-solvent should be compatible, that is, mutually soluble to an effective extent; in particular the non-solvent should at least partially be soluble in the solvent, and the non-solvent must be capable of forming pores in the quenched polymeric material in the presence of the solvent.

Skilled artisans often describe the solvent and non-solvent as a solvent and non-solvent pair. Generally preferred solvent and non-solvent pairs include N-methyl-2--pyrrolidinone and triethylene glycol, N-methyl-2-pyrrolidinone and a polyethylene glycol with a molecular weight of up to 1450, ethylene glycol dimethylether and water, tetrahydrofuran and water, ethylene glycol dimethylether and diisopropylketone, tetrahydrofuran and diisopropyl-ketone, diethylene glycol dimethylether and water, diethylene glycol dimethylether and tetralin, tetraethylene glycol dimethylether and N-methylacetamide, acetophenone and diethylene glycol dibutylether, methylene chloride and carbon tetrachloride, cyclohexanone and dodecane, and acetophenone and hexadecane. Generally more preferred solvent and non-solvent pairs include N-methyl-2--pyrrolidinone and triethylene glycol, cyclohexanone and dodecane, N-methyl-2-pyrrolidinone and a polyethylene glycol with a molecular weight of up to 400, and acetophenone and hexadecane. Even more generally preferred solvent and non-solvent pairs include N-methyl-2-pyrrolidinone and triethylene glycol, and N-methyl-2-pyrrolidinone and a polyethylene glycol with a molecular weight of up to 400.

Some compounds may be both a solvent and a non-solvent, wherein their function is dictated by the polymeric material and the temperature at which the membrane is formed.

In some embodiments, a solubilizing agent is used to aid in preparing a substantially homogeneous polymer, solvent, and optional non-solvent mixture. The solubilizing agent may be any solvent which aids in preparing such a substantially homogeneous mixture. The solubilizing agent is preferably a solvent which possesses a boiling point lower than the membrane fabrication temperature and the boiling points of the solvent and non-solvent. The mixture may be formed at temperatures below the fabrication temperature. The solubilizing agent aids in forming a substantially homogeneous mixture at such temperatures. Preferably the solubilizing agent evaporates, flashes off, or is otherwise removed, prior to or during fabrication. Preferred solubilizing agents depend upon the particular polymeric material and generally include halogenated hydrocarbons, cyclic and non-cyclic ethers, and alkyl ketones. More preferred solubilizing agents generally include methylene chloride, tetrahydrofuran, methyl ethyl ketone, methyl iodide, and chloroform. An even more preferred solubilizing agent is methylene chloride.

The solubilizing agent is generally not used in embodiments wherein the mixture is mixed at elevated temperatures under high shear or with good mixing, wherein the mixture is to be extruded shortly after formation of the substantially homogeneous mixture.

For embodiments wherein a non-ionic surfactant is contained in the membrane, the polymer, non-ionic surfactant, solvent, and optional non-solvent mixture comprises appropriate amounts of the polymeric material, non-ionic surfactant, solvent, and optional non-solvent to be extruded or cast into the membranes of this invention at the membrane fabrication temperature. For embodiments wherein a non-ionic surfactant is disposes on at least one membrane surface, the polymer, solvent and optional non-solvent mixture comprises appropriate amounts of polymeric material, solvent, and optional non-solvent to be extruded or cast into membranes of this invention of the membrane fabrication temperature. In particular, the mixture should possess an acceptable viscosity for such extrusion or casting at the membrane fabrication temperature. The upper limit on the viscosity is that viscosity at which the mixture is too viscous to be extruded or cast. The lower limit on the viscosity is that viscosity at which the mixture loses its physical integrity after leaving the vicinity of the extrusion die or spinnerette or is not able to be cast. For casting, preferably the viscosity of the mixture at the casting temperature is between about 10 poise and 200 poise. For extrusion, preferably the viscosity of the mixture at the extrusion temperature is between 1 X $10^3$ and 1 X $10^7$ poise.

Such a mixture is preferably substantially homogeneous at the membrane fabrication temperature. It is preferable that at the fabrication temperature, the mixture is close to the phase boundary between a one-phase mixture and a two-phase mixture. Therefore, the concentrations of the components in the mixture should be chosen such that the mixture is near the phase boundary at the fabrication temperature. Furthermore, if the polymer concentration is too high, the discriminating region will be too thick and the pores will be too small, thus reducing the gas flux through the formed membrane. If the polymer concentration is too low, the pores will be too large and the gas selectivity too low.

Preferably, for casting, the mixture comprises between 5 percent and 30 percent by weight of the polymeric material and 95 percent and 70 percent by weight of the combined solvent and optional non-solvent and optionally in appropriate cases the small amounts of non-ionic surfactant used in certain embodiments in this invention. Preferably, for extrusion, the mixture comprises between 30 percent and 65 percent by weight of the polymeric material and 35 percent and 70 percent by weight of the combined solvent and optional non-solvent and optionally in appropriate cases the small amounts of non-ionic surfactant used in certain embodiments in this invention. More preferably, for extrusion, the mixture comprises between 35 percent and 60 percent by weight of the polymeric material and 40 percent and 65 percent by weight of the combined solvent and optional non-solvent and optionally in appropriate cases the small amounts of non-ionic surfactant used by certain embodiments in this invention. Even more preferably, for extrusion, the mixture comprises between 40 percent and 55 percent by weight of the polymeric material and 45 percent and 60 percent by weight of the combined solvent and optional non-solvent and optionally in appropriate cases the small amounts of non-ionic surfactant used by certain embodiments in this invention. For casting, the mixture generally comprises somewhat less polymeric material than used for extrusion.

The ratio of the solvent to the non-solvent is dependent upon the polymeric material, the solvent and the non-solvent used, the relative solubilities with respect to one another, and the amount of water present in the mixture. The solvent/non-solvent ratio is preferably chosen such that the mixture is near the phase boundary at the membrane fabrication temperature. The solvent and non-solvent preferably are present in a ratio of between 0.5 and 10, more preferably between 1.0 and 5.0, and even more preferably between 2.0 and 2.5.

The amount of non-ionic surfactant in weight percent in embodiments when non-ionic surfactant is called for the mixture is preferably between 0.1 and 5, more preferably between 0.25 and 2.5, even more preferably between 0.50 and 1.0.

For embodiments in which the membrane does not contain non-ionic surfactant, rather non-ionic surfactant is disposed on at least one membrane surface, the components of the polymer, solvent, optional non-solvent having the same physical properties appropriate for membrane formation and the individual constituents having the same properties and being present in the same proportions, except for the non-ionic surfactant. In other respects the conditions of fabrication of membranes having non-ionic surfactant disposed on the surface thereof is for practical purposes substantially as described for membranes containing non-ionic surfactant.

The presence of water in the mixture may have a significant effect on the phase separation properties of the mixture. The amount of water in the mixture can therefore be used to partially control the phase separation properties of the mixture. The maximum allowable amount of water in the mixture depends upon the polymeric material and the composition of the mixture. The mixture preferably contains less than 1 weight percent water, more preferably less than 5,000 ppm water, even more preferably less than 3,500 ppm water, most preferably less than 2,000 ppm water.

The components of the mixture may be combined prior to casting or extrusion by mixing in any convenient manner with conventional mixing equipment, as for example, in a Hobart brand mixer or a resin kettle, or using static mixers. Alternatively, the mixture may be homogenized by extruding the mixture through a twin screw extruder, cooling the extrudate, and grinding or pelletizing the extrudate to a particle size readily fed to a single or twin screw extruder. The components of the mixture may also be combined directly in a melt-pot or twin screw extruder and extruded into membranes in a single step.

For casting, the mixture is heated to a temperature at which the mixture preferably forms a substantially homogeneous fluid and possesses sufficient viscosity at casting temperatures to permit casting of a membrane. A membrane may be cast into flat sheet form by pouring the fluid mixture onto a smooth support surface and drawing down the fluid mixture to an appropriate thickness with a suitable tool such as a doctor blade or casting bar. Alternatively, the mixture may be cast in a continuous process by casting the fluid mixture onto endless belts or rotating drums. The casting surface may be such that the membrane may thereafter be readily separated from the surface. For example, the membrane may be cast onto a support having a low surface energy, such as silicone, coated glass, Teflon, or coated metal, or a surface to which the membrane will not adhere. The cast membrane is thereafter subsequently quenched and leached as described hereinafter for membranes formed by the extrusion process.

For extrusion, the mixture is heated to a temperature at which the mixture preferably forms a substantially homogeneous fluid and possesses sufficient viscosity at extrusion temperatures to permit extrusion of a membrane. Substantially homogeneous fluid as used herein refers to a fluid in which the various components are substantially uniformly distributed. The upper limit on the pre-extrusion temperature is that temperature at which the polymeric material undergoes detrimental degradation in the presence of the particular solvent and non-solvent. Detrimental degradation means herein that the polymeric material degrades sufficiently such that the viscosity of the mixture is significantly lowered below that viscosity at which an acceptable membrane can be formed. In the case of hollow fiber membranes, this is generally indicated by the point at which the hollow fiber membrane collapses in the gaseous quench zone. Pre-extrusion temperatures are dependent upon the polymeric material, the non-ionic surfactant, the solvent and optional non-solvent used, and the concentrations of the components in the mixture. Preferably upper pre-extrusion temperatures are 280°C or below, more preferably 230°C or below, even more preferably 200°C or below. This upper pre-extrusion temperature limit is significantly affected by the type of extrusion apparatus that is used. Generally, a tradeoff exists between the temperature limit and the residence time in the heating area. With lower residence times, the mixture can be heated to higher temperatures. The lower limit on the pre-extrusion temperature is that temperature at which the viscosity of the mixture is sufficiently low enough to allow extrusion. Preferably lower pre-extrusion temperatures are 50°C or above, more preferably 70°C or above, even more preferably 90°C or above. Generally, the mixture is extruded at the temperatures hereinbefore described with respect to the pre-extrusion temperatures. Provided the temperature of the mixture during extrusion is within the functional limits hereinbefore described, the extrusion temperature may be significantly lower than the pre-extrusion temperature, for example, by as much as 20°C lower.

The heated mixture which preferably forms a substantially homogeneous fluid is extruded through a film or sheet die or a hollow fiber die or spinnerette. Hollow fiber spinnerettes are typically multi-holed and thus produce a tow of multiple hollow fibers. The hollow fiber spinnerettes include a means for supplying fluid to the core of the extrudate. The core fluid is used to prevent collapse of the hollow fibers as they exit the spinnerette. The core fluid preferably is a gas such as nitrogen, argon, air, carbon dioxide, or other inert gas. The core fluid pressure may be any pressure which prevents the hollow fiber membrane from collapsing and which does not deleteriously affect the properties of the hollow fiber membrane. The core fluid pressure is preferably between 0.1 and 0.5 inches of water (2.54 and 12.70 kg/$m^2$), more preferably 0.25 and 0.4 inches of water (6.35 and 10.16 kg/$m^2$).

Following extrusion, the membrane is passed through at least one gaseous quench zone under conditions such that the mixture cools and begins to phase separate. The temperature and residence time in the gaseous quench zone should be sufficient such that the mixture begins to phase separate but does not undergo complete phase separation in said zone, while the membrane may optionally undergo significant draw down within the gaseous quench zone. The upper limit on the temperature of the gaseous quench zone is that temperature below which the mixture possesses sufficient viscosity to retain its shape and integrity. Preferably upper temperatures are 120°C or below, more preferably 90°C or below, even more preferably 40°C or below. The lower temperature of the gaseous quench zone is that temperature above which the mixture undergoes substantially complete phase separation while in the gaseous quench zone. Preferably lower temperatures are 0°C or above, more preferably 10°C or above, even more preferably 20°C or above. As noted hereinbefore, the temperatures and the residence time are interdependent variables; at lower temperatures the residence time is shorter, while at higher temperatures the residence time is longer, so as to achieve the desired results within the gaseous quench zone. Preferably the upper limit on the residence time in the gaseous quench zone is 10 seconds or less, more preferably 6 seconds or less, even more preferably 1 second or less. The lower limit on residence time is preferably 0.05 seconds or greater, more preferably 0.1 seconds or greater, even more preferably 0.25 seconds or greater. Preferably the relative humidity within the gaseous quench zone at 24°C is between 20 percent and 80 percent, more preferably between 30 percent and 80 percent, even more preferably between 40 percent and 80 percent. Shrouds with cooling and flow control may be used to help adjust the gas flowrate, temperature, and humidity in the gaseous quench zone.

Within the gaseous quench zone, the membrane is optionally drawn down or elongated to the appropriate size and thickness. Drawing down or elongating means the membranes are stretched such that the cross sectional area of the membrane is smaller at the end of the drawing or elongation process. Preferably the lower limit on the draw down or elongation ratio is about 1.0, more preferably 1.5. Preferably the upper limit on the draw down or elongation ratio is 15, more preferably 10. The membrane may be drawn down in one or more stages with the option of using different draw rates and draw ratios in each stage. Line speeds are generally not critical and may vary significantly. Practical minimum preferred line speeds are at least 10 feet/minute (3.05 meters/minute), more preferably at least 30 feet/minute (9.14 meters/minute), even more preferably at least 100 feet/minute (30.48 meters/minute). Practical maximum preferred line speeds are less than 1,000 feet/minute (304.8 meters/minute), more preferably less than 500 feet/minute (152.4 meters/minute).

Following the gaseous quench zone, the membrane is passed into at least one liquid quench zone and optionally at least one liquid leach zone. Within the liquid quench and/or leach zone, the membrane substantially completes phase separation and a substantial portion of the solvent and optional non-solvent is removed. The liquid quench comprises any liquid which dissolves both the solvent and optional non-solvent and which does not appreciably dissolve the polymeric material or deleteriously affect the separation or mechanical properties of the formed membrane, without removing the non-ionic surfactant to a level less than that effective to impart improved thermal compaction resistance to the membrane. The liquid quench and/or leach medium is selected such that the polymeric material has a low solubility in the liquid medium; the solubility of the polymeric material in the liquid medium is 5.0 percent by weight or lower, more preferably 3.0 percent by weight or lower, even more preferably 1.0 percent by weight or lower, most preferably 0.5 percent by weight or lower. Examples of preferred liquid quench or leach media include lower alcohols, water, fluorocarbons, lower aliphatic hydrocarbons, and mixtures thereof. Water is a suitably convenient liquid quench and/or leach medium.

Optionally, after leaving the first liquid quench zone, the membrane may be passed through or contacted with other liquid quench or leach zones. The conditions of each liquid quench or leach zone is dependent upon the number of zones used and the conditions of the other zones. The conditions of the first liquid quench zone depends upon whether other liquid quench or leach zones are used. If only one liquid quench and/or leach zone is used, the conditions should be such that the membrane substantially completes phase separation and a substantial portion of the solvent and optional non-solvent is removed.

In the embodiment wherein only one combined liquid quench and/or leach zone is used, the upper temperature limit on the liquid quench zone is such that a substantial portion of the solvent and optional non-solvent is removed from the membrane while the membrane substantially completes phase separation within the liquid quench zone. Preferred temperatures of the liquid correspond to the preferred, more preferred, and even more preferred temperatures of the gaseous quench zone.Operating at ambient temperature is generally sufficient and convenient. The residence time in the liquid quench zone should be sufficient to allow substantial completion of the phase separation of the membrane and to allow removal of a substantial portion of the solvent and optional non-solvent. The residence time in the liquid quench zone may be as long as the economics of the process permit, provided that no deleterious effects result from such residence times, such as, for example, damage to the membrane due to bacterial growth. Low levels of sterilizing agents such as bleach may be added to the storage liquid to prevent or inhibit bacterial growth. Residence times of up to several days may be used. Preferably the upper limit on the residence time is about 240 minutes or lower, more preferably 120 minutes or lower, even more preferably 60 minutes or lower, most preferably 30 minutes or lower. Preferably, the lower residence time is 0.5 minutes or longer, more preferably 1 minute or longer, even more preferably 2 minutes or longer, most preferably 5 minutes or longer.

In a preferred embodiment, at least one liquid quench zone and at least one liquid leach zone are used. In this embodiment, the liquid quench zone temperature and residence time should be sufficient to result in at least partial phase separation of the membrane within said liquid quench zone, and to allow at least a portion of the solvent and optional non-solvent to be removed from the membrane. The lower temperature limit of the liquid quench zone is that temperature at which the liquid quench medium freezes. Generally, lower liquid quench zone temperatures are preferred. The preferred lower temperature is 0°C or greater. Preferably the upper temperature is 30°C or less, more preferably 20°C or less, even more preferably 10°C or less, most preferably 6°C or less. The lower limit on the residence time is preferably 0.05 seconds or greater, more preferably 0.1 seconds or greater, even more preferably 0.5 seconds or greater, most preferably 1 second or greater. The upper residence time is preferably 600 seconds or less, more preferably 300 seconds or less, even more preferably 30 seconds or less, and most preferably 20 seconds or less.

The liquid leach zone functions to remove substantially all of the remaining solvent and optional non-solvent. The conditions of the liquid leach zone should be such that substantially all of the remaining solvent and optional non-solvent are removed in the liquid leach zone and such that phase separation of the membrane is substantially completed. The temperature of the liquid leach zone is that temperature which facilitates the removal of the remaining solvent and optional non-solvent from the membrane. The lower limit on temperature is that temperature below which the solvent and optional non-solvent are no longer removed from the membrane at an acceptable rate. Preferred lower temperatures are 50°C or above, more preferred are 70°C or above, even more preferred are 80°C or above. The upper temperature limit on the liquid leach zone is that temperature at which either the liquid leach medium boils or the membrane properties are deleteriously affected. Preferred upper temperatures are 120°C or below, more preferred are 100°C or below, even more preferred are 90°C or below. Generally, as the temperature is lowered, the residence time required to achieve the same removal of solvent and optional non-solvent becomes longer. The residence time in the liquid leach zone should be sufficient to allow substantial completion of the phase separation of the membrane and to allow removal of a substantial portion of the remaining solvent and optional non-solvent at the leach zone temperature. The residence time in the liquid leach zone may be as long as the economics of the process permit, provided that no deleterious effects result from such residence times, such as, for example, damage to the membrane due to bacterial growth. Low levels of sterilizing agents such as bleach may be added to the storage liquid to prevent or inhibit bacterial growth. Residence times of up to several days may be used. Preferred residence times correspond to the residence times in the embodiment of a combined quench and/or leach zone.

The membrane is preferably dried either before or after fabrication into a membrane device. The membrane may be dried by exposing it to air or another inert gas such as nitrogen, argon, or carbon dioxide which is sufficiently dry to aid in the removal of liquids from the membrane. Such exposure takes pace at a temperature which does not deleteriously affect the separation or mechanical properties of the membrane and at which drying occurs at a reasonable rate,

preferably between 0°C and 100°C, more preferably between 5°C and 90°C, even more preferably between 10°C and 80°C. Such exposure may include a gentle flow of gas on the outside of the membrane either substantially perpendicular to the longitudinal direction of the membrane or along the longitudinal direction of the membrane. The drying gas may also be passed down the bores of hollow fiber membranes. The membrane may also be dried under vacuum.

Film membranes of this invention preferably possess a thickness of between 1 micron and 500 microns, preferably between 5 microns and 100 microns, more preferably of between 10 microns and 50 microns. Hollow fiber membranes of this invention preferably possess an outside diameter of between 50 microns and 500 microns, more preferably between 100 microns and 250 microns. The wall thickness of such hollow fiber membranes is preferably between 5 microns and 100 microns, more preferably between 10 microns and 50 microns. The membranes of this invention preferably exhibit transport properties similar to a dense membrane with an effective thickness of 5 microns or less, more preferably of 1.5 microns or less, even more preferably of 0.5 microns or less, most preferably of 0.1 microns or less. Effective thickness as used herein means that the membrane functions as if it is a homogeneous (dense) membrane of such thickness.

The membranes are fabricated into flat sheet, plate and frame, spiral wound, hollow fiber, or tubular membrane devices by methods known in the art. Hollow fiber membrane devices and spiral wound membrane devices are generally preferred. The membrane is generally sealingly mounted in a vessel or case in such a manner that the membrane separates the vessel into two fluid regions wherein fluid flow between the two regions is accomplished by fluid permeating through the membrane. The membrane separates a higher pressure region into which the feed gas mixture is introduced from a lower pressure region. One side of the membrane is contacted with the feed gas mixture under pressure, while a pressure differential is maintained across the membrane. At least one gaseous component in the feed gas mixture selectively passes through the membrane more rapidly than at least one other gaseous component in the feed gas mixture. Gas which is enriched in at least one gaseous component is thus obtained in the lower pressure region as permeate. Gas depleted in at least one gaseous component is obtained in the higher pressure region which is removed as non-permeate. As used herein, semi-permeable membrane refers to a membrane which displays different permeabilities for different species of molecules, and therefore may be used in the separation of molecules having different permeabilities across the membrane. Permeate as used herein refers to those species which permeate through the membrane at a faster rate than other species. Non-permeate as used herein refers to those species which permeate at a slower rate than the other species present. In the case of hollow fiber membranes, the feed gas may be introduced either on the outside of the hollow fiber membrane, that is, on the shellside of the membrane device, or on the inside of the hollow fiber membrane or bore, that is, on the tubeside of the membrane device. Preferably, the feed gas mixture is introduced on the inside of the hollow fiber membrane such that the higher pressure region is on the inside of the hollow fiber membrane and the lower pressure region is on the outside of the hollow fiber membrane.

The invention includes a process for separating at least one gaseous component from at least one other gaseous component in a gas mixture containing gases such as hydrogen, helium, oxygen, nitrogen, carbon monoxide, carbon dioxide, ammonia, hydrogen sulfide, water vapor, and light hydrocarbons. As used herein, the term light hydrocarbons refers to gaseous saturated and unsaturated $C_{1-4}$ hydrocarbons. The process is carried out at pressures and temperatures which do not deleteriously affect the membranes. Preferably, the pressure once higher pressure side of the membrane is between 35 psig (341 kPa) and 2,000 psig (13,890 kPa), more preferably between 100 psig (789 kPa) and 1,000 psig (6,995 kPa), even more preferably between 100 psig (789 kPa) and 500 psig (3,547 kPa). The pressure differential across the membrane is preferably between 15 psi (103 kPa) and 1,500 psi (10,342 kPa), more preferably between 50 psi (345 kPa) and 500 psi (3,447 kPa). The temperature at which the feed gas mixture is contacted with the membrane is preferably between 0°C and 150°C, more preferably between 5°C and 100°C.

Gas permeability is defined as

$$P = \frac{\text{(amount of permeant)(membrane thickness)}}{\text{(area)(time)(driving force across the membrane)}}$$

A standard permeability measurement unit is the Barrer (Ba), which is equal to

$$10^{-10} \frac{\text{(centimeter)}^3\text{(STP)(centimete)}}{\text{(centimeter)}^2\text{(second)(centimeter Hg)}}$$

$$\text{abbreviated hereinafter as } 10^{-10} \frac{\text{cm}^3\text{(STP)cm}}{\text{cm}^2\text{s cmHg}}$$

The reduced gas flux is defined as (permeability) ÷ (membrane thickness). A standard reduced flux unit is

$$10^{-6}\frac{(\text{centimeter})^3(\text{STP})}{(\text{centimeter})^2(\text{second})(\text{centimeter Hg})}$$

$$\text{abbreviated hereinafter as } 10^{-6}\frac{\text{cm}^3(\text{STP})}{\text{cm}^2\text{s cmHg}}$$

Alpha, the gas separation factor, or gas selectivity is defined as the ratio of the permeability or flux of the faster permeating gas to the permeability or flux of the slower permeating gas.

The membranes of this invention which contain non-ionic surfactants possess improved resistance to thermal compaction and aging. Such membranes preferably exhibit at least a 10 percent improvement, more preferably at least a 30 percent improvement, even more preferably at least a 50 percent improvement, in compaction rate as measured with air at 50°C and 1030 kPa (135 psig) for 720 hours compared to a membrane of the same polymeric material which does not contain the non-ionic surfactant.

Thermal compaction may be measured by change in oxygen flux or permeation rate over time. Percent improvement in thermal compaction is calculated by Equation I:

$$100\ X\left(1-\frac{\text{percent change in } O_2 \text{ flux with non-ionic surfactant}}{\text{percent change in } O_2 \text{ flux without non-ionic surfactant}}\right)$$

measured with air at 50°C and 930 kPa (135 psig) for 720 hours.

The membranes containing non-ionic surfactant of this invention preferably possess a separation factor for oxygen/nitrogen at 25°C of at least 6, more preferably of at least 7.

The membranes containing non-ionic surfactant of this invention preferably have a reduced gas flux for oxygen of at least 3 X $10^{-6}$ $cm^3$(STP)/($cm^2$s cmHg), more preferably of at least 6 X $10^{-6}$ $cm^3$(STP)/($cm^2$s cmHg). Such membranes preferably possess a permeability for oxygen of at least 0.5 Ba, more preferably of at least 1.2 Ba.

The membranes of this invention having a non-ionic surfactant disposed on at least one membrane surface possess improved gas selectivity and recovery properties compared with untreated membranes. The treated membranes of this invention preferably possess a selectivity for oxygen/nitrogen at 25°C of at least about 5 percent greater, more preferably of at least about 10 percent greater, than untreated membranes. The treated membranes of this invention preferably possess a recovery based on air as the feed gas at 25°C and 1.0 percent oxygen in the non-permeate of at least about 5 percent greater than the untreated membranes. The membranes of this invention preferably are characterized by a separation factor for oxygen/nitrogen at about 25°C of at least about 7.0, more preferably of at least about 7.5. The membranes of this invention preferably are characterized by a reduced gas flux for oxygen of at least about 6 X $10^{-6}$ $cm^3$(STP)/($cm^2$s cmHg), more preferably of at least about 10 X $10^{-6}$ $cm^3$(STP)/($cm^2$s cmHg). The membranes of this invention preferably are characterized by a recovery based on air as the feed gas at 1.0 percent oxygen concentration in the non-permeate of at least about 38 percent at about 25°C, more preferably of at least about 40 percent at about 25°C, even more preferably of at least about 42 percent at about 25°C.

The membranes of this invention may be operated in parallel or in series and/or combined with non-membrane separation processes such as cryogenics (low temperature distillation) and pressure swing adsorption.

The subject invention is further illustrated but not otherwise limited by the following examples.

Comparative Example 1

This example is for comparative purposes and is not representative of the instant invention.

About 520 grams of tetrabromobisphenol A polycarbonate was added to a 2 liter resin kettle equipped with a mechanical stirrer, nitrogen inlet, heating mantle, and cold water condenser and containing about 325 grams of N-methyl-2-pyrrolidinone and about 165 grams of triethylene glycol. To this mixture was added about 0.5 liters of methylene chloride as a solubilizing agent. The mixture was stirred and heated at about 50°C to 90°C for about 5-6 hours to remove the majority of the methylene chloride.

The mixture was transferred while warm to the spin pot of a melt pot extruder. The spin pot temperature was adjusted to about 110°C. The pump block and hollow fiber spinnerette pack temperatures were adjusted to between about 60°C and 80°C. Nitrogen was used as the core gas. Hollow fibers were extruded into a shrouded air zone in which the humidity was maintained at about 43 percent; the air temperature was maintained at about 10°C. The hollow fibers were quenched in water maintained at about 4°C for about 1.4 seconds when the line speed was set at about 100 feet per minute (30.48 meters per minute). The extruded hollow fibers were taken up on a fiber drum. Several lengths of hollow fibers were removed from the fiber drum tied at each end, immersed in a water leach bath at about 90°C for about

10 minutes to remove the solvent and non-solvent, and then air dried at room temperature for at least 2 hours.

Test units were prepared from the dried hollow fiber bundles using active fiber lengths of about 31.5 centimeters and epoxy tubesheets. The test units were evaluated using shell side feed of pure gases at a pressure of less than 50 psig (444.7 kPa). Initial values for nitrogen flux, oxygen flux, and oxygen/nitrogen separation factor were measured. The test units were then aged by heating the units at about 50°C for total time periods of about one hour, four hours, 24 hours, 48 hours, one week, and one month. After each heating period, the test units were retested at about 50°C. Flux values were corrected to 25°C. Results are reported in Table I.

Example 2

Tetrabromobisphenol A polycarbonate, about 520 grams was added to a 2 liter resin kettle equipped with a mechanical stirrer, nitrogen inlet, heating mantle, and cold water condenser and containing N-methy-2-pyrrolidinone, about 325 grams, and triethylene glycol, about 165 grams. To this mixture was added about 0.5 weight percent (2.6 grams based upon polycarbonate) of TRITON X-100 polyoxyethylene (10)-4(1,1,3,3-tetramethyl-butyl)phenyl ether, as well as about 0.5 liters of methylene chloride as a solubilizing agent. The mixture was then extruded, quenched, leached, dried and tested following the procedure described in Example 1. Data are listed in Table I.

Example 3

Hollow fibers were prepared and tested following the procedure of Example 2 except that about 1.0 weight percent (5.2 grams based upon polycarbonate) of TRITON X-100 polyoxyethylene (10)-4(1,1,3,3-tetra-methylbutyl)phenyl ether was added to the mixture. The results are listed in Table I.

Example 4

Hollow fibers were prepared and tested following the procedure of Example 2 except that about 0.5 weight percent (2.6 grams based upon polycarbonate) of TRITON X-405 polyoxyethylene (40)-4(1,1,3,3-tetra-methylbutyl)cyclohexane ether was added to the mixture. The results are given in Table I.

Example 5

Hollow fibers were prepared and tested using the procedure of Example 2 except that about 1.0 weight percent of TRITON X-405 polyoxyethylene (40)-4(1,1,3,3-tetramethylbutyl)cyclohexane ether was added to the mixture. Results are reported in Table I.

Table I

| Example | Non-ionic Surfactant (weight percent) | Initial Oxygen Flux $\frac{cm^3 (STP)}{cm^2 s\ cmHg}$ | Separation Factor $O_2/N_2$ | Aged* Oxygen Flux $\frac{cm^3 (STP)}{cm^2 s\ cmHg}$ | Change in Flux (percent) | Improvement in Compaction Rate (percent)** |
|---|---|---|---|---|---|---|
| 1 | 0 | $9.7 \times 10^{-6}$ | 6.4 | $6.1 \times 10^{-6}$ | -37.3 | - |
| 2 | 0.5 | $8.0 \times 10^{-6}$ | 6.2 | $7.0 \times 10^{-6}$ | -11.3 | 69.7 |
| 3 | 1.0 | $7.3 \times 10^{-6}$ | 7.1 | $5.6 \times 10^{-6}$ | -23.0 | 38.3 |
| 4 | 0.5 | $6.4 \times 10^{-6}$ | 6.7 | $4.9 \times 10^{-6}$ | -23.3 | 37.5 |
| 5 | 1.0 | $7.4 \times 10^{-6}$ | 6.8 | $6.2 \times 10^{-6}$ | -15.8 | 57.6 |

*Samples aged one month at 50°C.
**Equation 1.

TABLE I

| TREATMENT CONDITIONS | | | | | |
|---|---|---|---|---|---|
| Example | Non-ionic Surfactant | HLB Value | Concentration (ppm) | Time (minutes) | Pressure Drop kPa (psi) |
| 6 | TRITON X-100 | 13.5 | 150 | 60 | 344.7 (50) |
| 7 | TRITON X-100 | 13.5 | 150 | 60 | 344.7 (50) |
| 8 | TRITON X-100 | 13.5 | 50 | 60 | 344.7 (50) |
| 9 | TRITON X-100 | 13.5 | 50 | 60 | 344.7 (50) |
| 10 | TRITON X-100 | 13.5 | 150 | 60 | 344.7 (50) |
| 11 | TRITON X-100 | 13.5 | 150 | 60 | 172.4 (25) |
| 12 | TRITON X-100 | 13.5 | 150 | 30 | 172.4 (25) |
| 13 | TRITON X-100 | 13.5 | 50 | 60 | 344.7 (50) |
| 14 | TRITON X-100 | 13.5 | 50 | 60 | 172.4 (25) |
| 15 | TRITON X-100 | 13.5 | 50 | 30 | 172.4 (25) |
| 16 | ZONYL FSO-100 | 10-13 | 50 | 60 | 344.7 (50) |
| 17 | ZONYL FSO-100 | 10-13 | 150 | 60 | 344.7 (50) |
| 18 | ZONYL FSO-100 | 10-13 | 300 | 60 | 344.7 (50) |
| 19 | ZONYL FSO-100 | 10-13 | 600 | 60 | 344.7 (50) |
| 20 | TERGITOL NP-4 | 8.9 | 150 | 60 | 344.7 (50) |
| 21 | TERGITOL NP-6 | 10.9 | 150 | 60 | 344.7 (50) |
| 22 | TERGITOL NP-7 | 11.7 | 150 | 60 | 344.7 (50) |
| 23 | TERGITOL NP-10 | 13.6 | 150 | 60 | 344.7 (50) |
| 24 | TRITON X-102 | 14.6 | 150 | 60 | 344.7 (50) |

Examples 6-24

The following general procedure was used for Examples 6-24. Hollow fiber membranes were extruded from a blend containing by weight about 50 percent tetrabromobisphenol A polycarbonate, 33 percent N-methyl-2-pyrrolidinone, and 17 percent triethylene glycol at about 75°C, quenched, and leached in accordance with the general procedure described in U.S. Patent 4,772,392. For each example, hollow fibers having a nominal size of about 90 microns internal diameter by about 130 microns external diameter were cut to about 42 inch (106.7 centimeter) lengths and fabricated into a test cell by inserting the fibers into a piece of 1/2 inch (1.3 centimeters) diameter copper tubing, and potting both ends of the tubing with epoxy resin. The test cell was thoroughly bore flushed with distilled water before being treated with the non-ionic surfactant. The test cell was then thoroughly bore flushed with a solution of non-ionic surfactant in distilled water. The solution of the non-ionic surfactant in distilled water was then passed through the bores of the hollow fibers in the test cell for about 30 to 60 minutes using a pressure drop across the fiber of about 50 psi (344.7 kPa) or 30 psi (206.8 kPa) The test cell was then flushed with distilled water through the bores of the hollow fibers for about 60 minutes using a feed pressure of about 75 psi (517.1 kPa) and an adjusted back pressure of about 25 psi (172.4) kPa. The fibers in the test cell were then dried by passing nitrogen gas through the hollow fiber bores at about 20 psi (137.9 kPa) overnight. Treatment conditions are summarized in Table I for each example. The test cells were evaluated both before and after treatment for single gas permeation and mixed gas recovery performance. Data are summarized in Tables II and III.

TABLE II
SINGLE GAS PERMEATION

| Example | Oxygen Flux $\frac{cm^3 (STP)}{cm^2 s\ cmHg}$ X $10^6$ | | Percent Flux Change | Separation Factor Oxygen/Nitrogen | | Percent Separation Factor Change |
|---|---|---|---|---|---|---|
| | Untreated | Treated | | Untreated | Treated | |
| 6 | 18.4 | 11.6 | -37.0 | 6.4 | 7.5 | +17.2 |
| 7 | 11.8 | 9.2 | -22.0 | 7.4 | 7.9 | +6.8 |
| 8 | 17.0 | 11.7 | -31.2 | 7.1 | 7.8 | +9.0 |
| 9 | 18.0 | 10.4 | -42.2 | 7.0 | 7.6 | +8.6 |
| 10 | 13.7 | 8.5 | -38.0 | 7.6 | 7.9 | +4.0 |
| 11 | 19.2 | 11.2 | -41.7 | 6.7 | 7.6 | +13.4 |
| 12 | 18.7 | 10.8 | -42.3 | 7.0 | 7.7 | +10.0 |
| 13 | 19.3 | 10.6 | -45.1 | 6.8 | 7.4 | +8.8 |
| 14 | 18.1 | 11.5 | -36.5 | 6.5 | 7.5 | +14.4 |
| 15 | 20.0 | 12.5 | -37.5 | 6.9 | 7.7 | +11.6 |
| 16 | 19.0 | 13.7 | -27.9 | 6.9 | 7.5 | +8.7 |
| 17 | 19.4 | 13.6 | -29.9 | 7.0 | 7.6 | +8.6 |

TABLE II
SINGLE GAS PERMEATION

| Example | Oxygen Flux $\frac{cm^3\ (STP)}{cm^2 s\ cmHg} \times 10^6$ | | Percent Flux Change | Separation Factor Oxygen/Nitrogen | | Percent Separation Factor Change |
|---|---|---|---|---|---|---|
| | Untreated | Treated | | Untreated | Treated | |
| 18 | 19.2 | 13.6 | -29.1 | 6.9 | 7.4 | +7.3 |
| 19 | 19.6 | 13.1 | -33.1 | 6.8 | 7.5 | +10.3 |
| 20 | 21.7 | 10.7 | -51.0 | 6.8 | 8.1 | +19.0 |
| 21 | 22.4 | 11.5 | -48.8 | 6.6 | 8.0 | +21.1 |
| 22 | 21.6 | 11.5 | -47.0 | 6.7 | 7.7 | +15.9 |
| 23 | 22.5 | 11.9 | -47.2 | 6.9 | 7.8 | +13.9 |
| 24 | 21.5 | 12.7 | -41.1 | 6.8 | 7.7 | +13.5 |

TABLE III

| MIXED GAS RECOVERY* | | | | |
|---|---|---|---|---|
| Example | Percent Oxygen in Non-Permeate | | Percent Recovery | |
| | Untreated | Treated | Untreated | Treated |
| 6 | 0.60 | 0.75 | 34.2 | 38.3 |
| | 1.02 | 1.00 | 37.3 | 40.4 |
| | 1.40 | 1.20 | 40.1 | 42.0 |
| 7 | 0.75 | 0.62 | 35.3 | 37.5 |
| | 1.02 | 0.95 | 38.2 | 40.7 |
| | 1.30 | 1.45 | 40.1 | 44.4 |
| 8 | 0.70 | 0.65 | 33.0 | 38.8 |
| | 1.05 | 1.01 | 36.9 | 41.7 |
| | 1.40 | 1.42 | 39.4 | 44.6 |
| 9 | 0.65 | 0.62 | 32.1 | 37.0 |
| | 1.02 | 1.00 | 36.6 | 41.1 |
| | 1.35 | 1.38 | 39.2 | 43.5 |
| 10 | 1 | 1 | 39.6 | 40.5 |
| 11 | 1 | 1 | 35.1 | 39.5 |
| 12 | 1 | 1 | 37.1 | 40.2 |
| 13 | 1 | 1 | 37.6 | 39.9 |
| 14 | 1 | 1 | 36.3 | 39.5 |
| 15 | 1 | 1 | 37.2 | 39.4 |
| 16 | 1 | 1 | 36.0 | 39.5 |
| 17 | 1 | 1 | 37.1 | 39.8 |
| 18 | 1 | 1 | 35.2 | 38.0 |
| 19 | 1 | 1 | 35.2 | 39.1 |
| 20 | 1 | 1 | 38.6 | 42.1 |
| 21 | 1 | 1 | 29.3 | 41.6 |
| 22 | 1 | 1 | 38.1 | 41.1 |
| 23 | 1 | 1 | 38.5 | 41.8 |
| 24 | 1 | 1 | 38.6 | 41.1 |

*feed gas = air at 25°C

## Claims

1. A semi-permeable gas separation membrane comprising at least one discriminating region and at least one porous region, wherein said discriminating region functions to selectively separate at least one gaseous component from at least one other gaseous component in a gas mixture, wherein said discriminating region and said porous region are comprised of the same hydrophobic polymeric material, which possesses an equilibrium water content at 25°C of less than 1 weight percent, wherein said porous region comprises a plurality of pores having an effective average pore size in the range of up to 50 nm (500 Angstroms), wherein said membrane contains distributed throughout a

non-ionic surfactant having a molecular weight of between 200 and 10,000 and an HLB value of between 6.0 and 18.0, wherein said membrane exhibits at least a 10 percent improvement in compaction rate said improvement being defined by the equation

$$100 \times \left(1 - \frac{\text{percent change in } O_2 \text{ flux with non-ionic surfactant}}{\text{percent change in } O_2 \text{ flux without non-ionic surfactant}}\right)$$

as measured with air at about 50°C and 1030 KPa (135 psig) for 720 hours; wherein said hydrophobic polymeric material comprises at least one polymer selected from the group consisting of polycarbonates, polyesters, polyestercarbonates, polyphenylene oxides, polysulfones, polyolefins, polyphenylene sulfides, polyethers, fluorinated polyimides, polystyrenes, polyetherketones, polyetheretherketones, polyetherimides, and polyamideimides.

2. A semi-permeable gas separation membrane comprising:

at least one discriminating region and at least one porous region, wherein said discriminating region functions to selectively separate at least one gaseous component from at least one other gaseous component in a gas mixture, wherein said discriminating region and said porous region are comprised of a hydrophobic polymer selected from the group consisting of a polycarbonate, a polyester, a polyestercarbonate, and a combination thereof, which polymer possesses an equilibrium water content at about 25°C of less than 1 weight percent, wherein said porous region comprises a plurality of pores having an effective average pore size in the range of up to about 500 Angstroms; and

a non-ionic surfactant disposed on at least one surface of said membrane in form of a solution, the solvent of which does not swell the membrane material, wherein said non-ionic surfactant is characterized by an HLB value of between about 8.0 and about 17.0;

wherein said membrane exhibits a gas selectivity for oxygen/nitrogen at about 25°C of at least about 7.0 and a recovery based on air as the feed gas with about 1.0 percent oxygen in the non-permeate of at least about 38 percent at about 25°C.

3. The membrane of Claim 1 or claim 2 wherein said polymeric material comprises a polymer backbone structure containing repeat units corresponding to the formula:

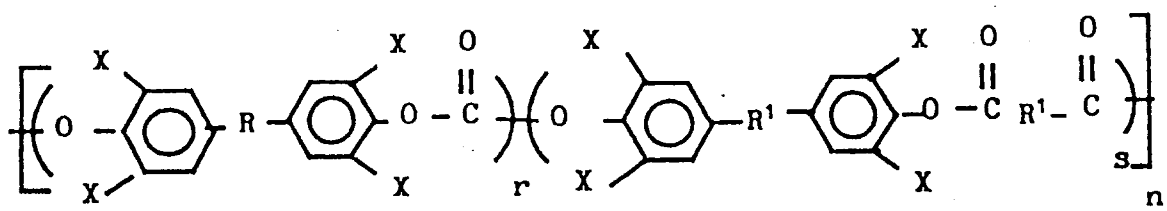

wherein

R is independently in each occurrence selected from the group consisting of a direct bond, -CO-, $-CO_2-$, -S-, $-SO_2-$, -SO-, -O-, a $C_{1-12}$ divalent halocarbon radical, and an inertly substituted $C_{1-12}$ divalent hydrocarbon radical;

$R^1$ is independently in each occurrence selected from the group consisting of an inertly substituted $C_{1-18}$ divalent hydrocarbon radical, and a $C_{1-18}$ divalent halocarbon radical;

X is independently in each occurrence selected from the group consisting of hydrogen, a halogen, a $C_{1-6}$ alkyl, a $C_{1-4}$ haloalkyl, and a $C_{1-4}$ alkoxy;

r is a positive real number between 0 and 1 inclusive;

s is a positive real number between 0 and 1 inclusive; and

n is a positive real number, such that the polymeric material possesses sufficient molecular weight to prepare a membrane with suitable characteristics.

4. The membrane of Claim 3 wherein the ratio s/r is in the range of from 0.005 to 200.

5. The membrane of any of Claims 3 through 4 wherein X is independently in each occurrence selected from the group consisting of chlorine, bromine, fluorine, and methyl.

6. The membrane of any of Claims 1 through 5 wherein said non-ionic surfactant is selected from the group consisting of alkyl phenol ethoxylate non-ionic surfactants, alcohol ethoxylate non-ionic surfactants, polyoxyethylenated polyoxypropylene glycols non-ionic surfactants, alkyl poly(ethylene glycol)ether non-ionic surfactants, and fluorinated non-ionic surfactants.

7. The membrane of any of Claims 1 through 6 wherein the oxygen flux through said membrane is at least about 3 X $10^{-6}$ $cm^3$(STP)/($cm^2$s cmHg).

8. The membrane of any of Claims 1 through 7 wherein the gas separation factor for oxygen/nitrogen at about 25°C is at least about 6.

9. A method for separating at least one gaseous component from at least one other gaseous component in a gas mixture comprising:

(A) contacting one side of the semi-permeable gas separation membrane according to any of Claims 1 through 8 with a feed gas mixture under pressure, wherein said membrane separates a higher pressure region on one side of the membrane from a lower pressure region on the opposite side of said membrane;
(B) maintaining a pressure differential across said membrane under conditions such that at least one gaseous component in the feed gas mixture selectively permeates through the membrane from the higher pressure region to the lower pressure region;
(C) removing from the lower pressure region permeated gas which is enriched in at least one gaseous component; and
(D) removing from the higher pressure region non-permeated gas which is depleted in at least one gaseous component.

10. A process for preparing a semi-permeable gas separation membrane of Claims 1 and 3 through 8 comprising:

(A) forming a mixture comprising:

(i) a hydrophobic polymeric material which is capable of being formed into a membrane, said hydrophobic polymeric material comprising at least one polymer selected from the group consisting of polycarbonates, polyesters, polyestercarbonates, polyphenylene oxides, polysulfones polyolefins, polyphenylene sulfides, polyethers, fluorinated polyimides, polystyrenes, polyetherketones, polyetheretherketones, polyetherimides, and polyamideimides
(ii) at least one solvent for said polymeric material,
(iii) at least one non-ionic surfactant which has a molecular weight of between about 200 and about 10,000 and an HLB value of between about 6.0 and about 18.0, and
(iv) optionally, at least one non-solvent for said polymeric material;

(B) heating said mixture to a temperature at which said mixture forms a fluid and possesses sufficient viscosity at extrusion or casting conditions to permit fabrication of a membrane;
(C) extruding or casting said fluid into a membrane;
(D) passing said membrane through at least one gaseous quench zone under conditions such that said mixture cools and begins to phase separate;
(E) passing said membrane through at least one liquid quench zone comprising a liquid in which said polymeric material possesses low solubility wherein at least a portion of said solvent and optional non-solvent is removed from said membrane; and
(F) simultaneously or consecutively passing said membrane through at least one liquid leach zone comprising a liquid in which said polymeric material possesses low solubility, wherein a substantial portion of the remaining solvent and optional non-solvent is removed from said membrane.

11. A process for preparing a semi-permeable gas separation membrane of Claims 2 through 8 comprising:

(A) forming a mixture comprising:

(i) at least one polymer selected form the group consisting of polycarbonate, polyester, polyestercarbonate, and a combination thereof,
(ii) at least one solvent for said polymer, and
(iii) optionally, at least one non-solvent for said polymer;

(B) heating said mixture to a temperature at which said mixture forms a fluid and possesses sufficient viscosity at extrusion or casting conditions to permit fabrication of a membrane;

(C) extruding or casting said fluid into a membrane;

(D) passing said membrane through at least one gaseous quench zone under conditions such that said mixture cools and begins to phase separate;

(E) passing said membrane through at least one liquid quench zone comprising a liquid in which said polymer possesses low solubility, wherein at least a portion of said solvent and optional non-solvent is removed from said membrane;

(F) simultaneously or consecutively passing said membrane through at least one liquid leach zone comprising a liquid in which said polymer possesses low solubility, wherein a substantial portion of the remaining solvent and optional non-solvent is removed from said membrane; and

(G) contacting at least one surface of said membrane with a non-ionic surfactant which possesses an HLB value of between about 8.0 and about 17.0.

**Patentansprüche**

1. Semipermeable Gastrennmembran, umfassend wenigstens einen Trennbereich und wenigstens einen porösen Bereich, worin dieser Trennbereich zur selektiven Trennung wenigstens einer gasförmigen Komponente von wenigstens einer anderen gasförmigen Komponente in einem Gasgemisch wirkt, wobei dieser Trennbereich und dieser poröse Bereich aus demselben hydrophoben polymeren Material bestehen, das einen Gleichgewichtswassergehalt bei 25° C von weniger als 1 Gew.-% besitzt, wobei dieser poröse Bereich eine Vielzahl von Poren mit einer effektiven Porendurchschnittsgröße von im Bereich bis zu 50 nm (500 Angström) umfaßt, wobei diese Membran hierin verteilt nicht-ionisches grenzflächenaktives Mittel mit einem Molekulargewicht zwischen 200 und 10.000 und einem HLB-Wert zwischen 6,0 und 18,0 enthält, wobei diese Membran eine wenigstens 10 %ige Verbesserung in der Verdichtungsrate zeigt, wobei diese Verbesserung durch die Gleichung definiert ist:

$$100 \times \left(1 - \frac{\text{prozentuale Änderung im } O_2\text{-Fluß mit nicht-ionischem grenzflächchenaktivem Mittel}}{\text{prozentuale Änderung im } O_2\text{-Fluß ohne nicht-ionisches grenzflächenaktives Mittel}}\right)$$

gemessen mit Luft bei etwa 50° C und 1.030 kPa (135 psig) für 720 Stunden, wobei dieses hydrophobe polymere Material wenigstens ein Polymeres umfaßt, ausgewählt aus der aus Polycarbonaten, Polyestern, Polyestercarbonaten, Polyphenylenoxiden, Polysulfonen, Polyolefinen, Polyphenylensulfiden, Polyethern, fluorierten Polyimiden, Polystyrolen, Polyetherketonen, Polyetheretherketonen, Polyetherimiden und Polyamidimiden bestehenden Gruppe.

2. Semipermeable Gastrennmembran, umfassend wenigstens einen Trennbereich und wenigstens einen porösen Bereich, worin dieser Trennbereich zur selektiven Trennung wenigstens einer gasförmigen Komponente von wenigstens einer anderen gasförmigen Komponente in einem Gasgemisch wirkt, wobei dieser Trennbereich und dieser poröse Bereich aus einem hydrophoben Polymeren bestehen, ausgewählt aus der aus einem Polycarbonat, einem Polyester, einem Polyestercarbonat und einer Kombination hiervon bestehenden Gruppe, das einen Gleichgewichtswassergehalt bei 25° C von weniger als 1 Gew.-% besitzt, wobei dieser poröse Bereich eine Vielzahl von Poren mit einer effektiven Porendurchschnittsgröße von im Bereich bis zu etwa 500 Angström umfaßt, und ein nicht-ionisches grenzflächenaktives Mittel, das auf wenigstens einer Oberfläche der Membran in Form einer Lösung, deren Lösungsmittel das Membranmaterial nicht quillt, angeordnet ist, wobei dieses nicht-ionische grenzflächenaktive Mittel durch einen HLB-Wert zwischen etwa 8,0 und 17,0 charakterisiert ist, wobei diese Membran eine Gasselektivität für Sauerstoff/Stickstoff bei etwa 25° C von wenigstens etwa 7,0 zeigt und eine Gewinnung, basierend auf Luft als Einspeisungsgas, mit etwa 1,0 % Sauerstoff im Nichtpermeat von wenigstens etwa 38 % bei etwa 25° C.

3. Membran nach Anspruch 1 oder Anspruch 2, worin dieses polymere Material eine Polymerrückgratstruktur umfaßt, die sich wiederholende Einheiten entsprechend der Formel enthält:

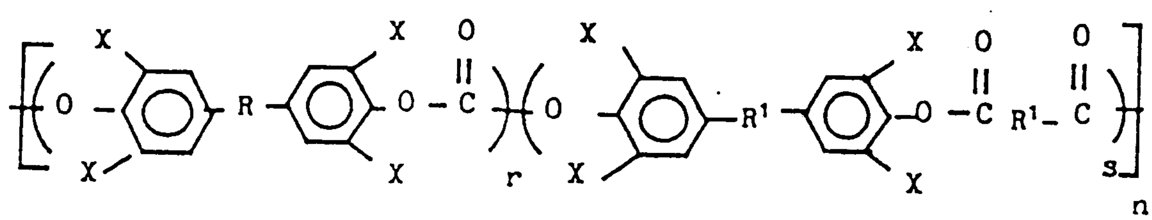

worin:

R unabhängig von jedem Vorkommen aus der Gruppe ausgewählt ist, die besteht aus: einer direkten Bindung, -CO-, $-CO_2-$, -S-, $-SO_2-$, -SO-, -O-, einem zweiwertigen $C_{1-12}$-Halogenkohlenwasserstoffrest und einem inert substituierten zweiwertigen $C_{1-12}$-Kohlenwasserstoffrest,

$R^1$ unabhängig von jedem Vorkommen aus der Gruppe ausgewählt ist, die besteht aus: einem inert substituierten zweiwertigen $C_{1-18}$-Kohlenwasserstoffrest und einem zweiwertigen $C_{1-8}$-Halogenkohlenwasserstoffrest

X unabhängig von jedem Vorkommen aus der Gruppe ausgewählt ist, die besteht aus: Wasserstoff, einem Halogen, einem $C_{1-6}$-Alkyl, einem $C_{1-4}$-Halogenalkyl und einem $C_{1-4}$-Alkoxy,

r eine positive reelle Zahl zwischen 0 und einschließlich 1 ist,

s eine positive reelle Zahl zwischen 0 und einschließlich 1 ist, und

n eine solche positive reelle Zahl ist, daß das polymere Material ausreichendes Molekulargewicht zur Herstellung einer Membran mit geeigneten Merkmalen besitzt

**4.** Membran nach Anspruch 3, worin das Verhältnis s/r in dem Bereich von 0,005 bis 200 liegt.

**5.** Membran nach einem der Ansprüche 3 bis 4, worin X unabhängig von jedem Vorkommen aus der aus Chlor, Brom, Jod und Methyl bestehenden Gruppe ausgewählt ist.

**6.** Membran nach einem der Ansprüche 1 bis 5, worin dieses nicht-ionische grenzflächenaktive Mittel aus der aus nicht-ionischen Alkylphenolethoxylat-grenzflächenaktiven Mitteln, nicht-ionischen Alkoholethoxylat-grenzflächenaktiven Mitteln, nicht-ionischen polyoxyethylenierten Polyoxypropylenglykolgrenzflächenaktiven Mitteln, nicht-ionischen Alkypoly(ethylenglykol)-ether-grenzflächenaktiven Mitteln und nicht-ionischen fluorierten grenzflächenaktiven Mitteln bestehenden Gruppe ausgewählt ist.

**7.** Membran nach einem der Ansprüche 1 bis 6, worin der Sauerstoff-Fluß durch diese Membran wenigstens etwa 3 x $10^{-6}$ $cm^3$ (STP)/($cm^2$ • s • cm Hg) beträgt.

**8.** Membran nach einem der Ansprüche 1 bis 7, worin der Gastrennfaktor für Sauerstoff/Stickstoff bei etwa 25° C wenigstens etwa 6 beträgt.

**9.** Verfahren zur Trennung wenigstens einer gasförmigen Komponente von wenigstens einer anderen gasförmigen Komponente in einem Gasgemisch, umfassend:

(A) Inkontaktbringen wenigstens einer Seite der semipermeablen Gastrennmembran nach einem der Ansprüche 1 bis 8 mit einem Einspeisungsgasgemisch unter Druck, worin diese Membran einen Bereich mit höherem Druck auf einer Seite der Membran von einem Bereich mit niedrigerem Druck auf der gegenüberliegenden Seite dieser Membran trennt;

(B) Aufrechthalten eines Druckdifferentials quer über die Membran unter solchen Bedingungen, daß wenigstens eine gasförmige Komponente in dem Einspeisungsgasgemisch selektiv durch die Membran von dem Bereich mit höherem Druck zu dem Bereich mit niedrigerem Druck permeiert;

(C) Entfernen von permeiertem Gas, das an wenigstens einer gasförmigen Komponente angereichert ist, aus dem Bereich mit niedrigerem Druck; und

(D) Entfernen von nicht-permeiertem Gas, das an wenigstens einer gasförmigen Komponente abgereichert ist, aus dem Bereich mit höherem Druck.

**10.** Verfahren zur Herstellung einer semipermeablen Gastrennmembran nach einem der Ansprüche 1 und 3 bis 8, umfassend:

(A) Bildung einer Mischung, umfassend:

(i) ein hydrophobes polymeres Material, das zu einer Membran verformbar ist, wobei dieses hydrophobe polymere Material wenigstens ein Polymeres umfaßt, ausgewählt aus der aus Polycarbonaten, Polyestern, Polyestercarbonaten, Polyphenylenoxiden, Polysulfonen, Polyolefinen, Polyphenylensulfiden, Polyethern, fluorierten Polyimiden, Polystyrolen, Polyetherketonen, Polyetheretherketonen, Polyetherimiden und Polyamidimiden bestehenden Gruppe,
(ii) wenigstens ein Lösungsmittel für dieses polymere Material, (iii) wenigstens ein nicht-ionisches grenzflächenaktives
Mittel, das ein Molekulargewicht zwischen etwa 200 und etwa 10.000 besitzt und einen HLB-Wert zwischen etwa 6,0 und etwa 18,0 aufweist, und
(iv) wahlweise wenigstens ein Nichtlösungsmittel für dieses polymere Material;

(B) Erhitzen dieser Mischung auf eine Temperatur, bei der diese Mischung ein Fluid bildet und ausreichend Viskosität bei Extrusions- oder Gießbedingungen besitzt, um die Herstellung einer Membran zu erlauben;
(C) Extrudieren oder Gießen dieses Fluids zu einer Membran;
(D) Durchführen dieser Membran durch wenigstens eine gasförmige Abschreckzone unter solchen Bedingungen, daß diese Mischung abkühlt und Phasentrennung beginnt;
(E) Durchführen dieser Membran durch wenigstens eine flüssige Abschreckzone, die eine Flüssigkeit umfaßt, in welcher dieses polymere Material niedrige Löslichkeit besitzt, worin wenigstens ein Teil dieses Lösungsmittels und wahlweisen Nichtlösungsmittels aus dieser Membran entfernt wird; und
(F) gleichzeitiges oder nachfolgendes Durchführen dieser Membran durch wenigstens eine flüssige Auslaugzone, die eine Flüssigkeit umfaßt, in welcher dieses polymere Material niedrige Löslichkeit besitzt, worin ein wesentlicher Anteil des verbleibenden Lösungsmittels und wahlweisen Nichtlösungsmittels aus dieser Membran entfernt wird.

**11.** Verfahren zur Herstellung einer semipermeablen Gastrennmembran nach Anspruch 2 bis 8, umfassend:

(A) Bildung einer Mischung, umfassend:

(i) wenigstens ein Polymeres, ausgewählt aus der aus Polycarbonat, Polyester, Polyestercarbonat oder einer Kombination hiervon bestehenden Gruppe,
(ii) wenigstens ein Lösungsmittel für dieses Polymere; und
(iii) wahlweise wenigstens ein Nichtlösungsmittel für dieses Polymere;

(B) Erhitzen dieser Mischung auf eine Temperatur, bei der diese Mischung ein Fluid bildet und ausreichend Viskosität bei Extrusions- oder Gießbedingungen besitzt, um die Herstellung einer Membran zu erlauben;
(C) Extrudieren oder Gießen dieses Fluids zu einer Membran;
(D) Durchführen dieser Membran durch wenigstens eine gasförmige Abschreckzone unter solchen Bedingungen, daß diese Mischung abkühlt und Phasentrennung beginnt;
(E) Durchführen dieser Membran durch wenigstens eine flüssige Abschreckzone, die eine Flüssigkeit umfaßt, in welcher dieses Polymere niedrige Löslichkeit besitzt, worin wenigstens ein Teil dieses Lösungsmittels und wahlweisen Nichtlösungsmittels aus dieser Membran entfernt wird; und
(F) gleichzeitiges oder nachfolgendes Durchführen dieser Membran durch wenigstens eine flüssige Auslaugzone, die eine Flüssigkeit umfaßt, in welcher dieses Polymere niedrige Löslichkeit besitzt, worin ein wesentlicher Anteil des verbleibenden Lösungsmittels und wahlweisen Nichtlösungsmittels aus dieser Membran entfernt wird; und
(G) Inkontaktbringen wenigstens einer Oberfläche dieser Membran mit einem nicht-ionischen grenzflächenaktiven Mittel, das einen HLB-Wert zwischen etwa 8,0 und etwa 17,0 besitzt.

## Revendications

**1.** Membrane semi-perméable de séparation de gaz, comprenant au moins une région poreuse et au moins une région discriminante dont le rôle est de séparer sélectivement au moins un composant gazeux d'avec au moins un autre composant gazeux au sein d'un mélange de gaz, ladite région discriminante et ladite région poreuse étant faites du même matériau polymère hydrophobe dont la teneur en eau à l'équilibre, à 25°C, vaut moins de 1 % en poids, ladite région poreuse comportant de multiples pores dont la taille moyenne effective vaut au plus 50 nm (500 angströms), ladite membrane contenant, réparti dans tout son volume, un tensioactif non-ionique dont la masse molaire vaut entre 200 et 10 000 et dont le RHL vaut entre 6,0 et 18,0, ladite membrane présentant une amélioration d'au moins 10 % du taux de tassement, mesuré avec de l'air à environ 50°C et sous environ 1030 kPa (135 psig) pendant 720 heures, ladite amélioration étant définie par l'équation suivante :

$$100 \times \left(1- \frac{\text{pourcentage de variation du flux d'}O_2\text{ en présence du tensioactif non-ionique}}{\text{pourcentage de variation du flux d'}O_2\text{ en l'absence du tensioactif non-ionique}}\right)$$

et ledit matériau polymère hydrophobe comportant au moins un polymère choisi dans l'ensemble que constituent les polycarbonates, polyesters, poly(ester carbonate), poly(phénylène éther), polysulfones, polyoléfines, poly(sulfure de phénylène), polyéthers, polyimides fluorés, polystyrènes, poly(éther cétone), poly(éther éther cétone), poly(éther imide) et poly(amide imide).

**2.** Membrane semi-perméable de séparation de gaz, comprenant :

- au moins une région poreuse et au moins une région discriminante dont le rôle est de séparer sélectivement au moins un composant gazeux d'avec au moins un autre composant gazeux au sein d'un mélange de gaz, ladite région discriminante et ladite région poreuse étant faites d'un polymère hydrophobe qui est choisi dans l'ensemble que constituent les polycarbonates, les polyesters, les poly(ester carbonate) et leurs mélanges, et dont la teneur en eau à l'équilibre, à environ 25°C, vaut moins de 1 % en poids, ladite région poreuse comportant de multiples pores dont la taille moyenne effective vaut au plus environ 500 angströms ; et
- un tensioactif non-ionique déposé sur au moins une surface de la membrane sous la forme d'une solution dont le solvant ne fait pas gonfler le matériau de la membrane, lequel tensioactif non-ionique est caractérisé par un RHL valant entre environ 8,0 et environ 17,0 ; ladite membrane présentant une sélectivité pour les gaz oxygène/azote d'au moins environ 7,0 aux environs de 25°C, et un taux de récupération, par rapport à de l'air employé comme gaz d'alimentation et pour environ 1,0 % d'oxygène dans le rétentat, d'au moins environ 38 % aux environs de 25°C.

**3.** Membrane conforme à la revendication 1 ou 2, dans laquelle ledit matériau polymère comporte un squelette polymère qui contient des motifs répétés correspondant à la formule

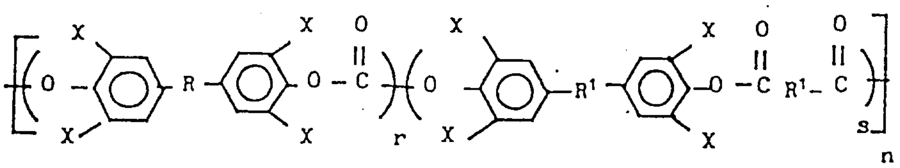

dans laquelle
R, indépendamment dans chaque cas, est choisi dans l'ensemble constitué par une liaison directe, les chaînons -CO-, $-CO_2-$, -S-, $-SO_2-$, -SO- et -O-, les radicaux halogénocarbonés divalents en $C_{1-12}$ et les radicaux hydrocarbonés divalents en $C_{1-12}$ portant des substituants inertes,
$R^1$, indépendamment dans chaque cas, est choisi dans l'ensemble constitué par les radicaux hydrocarbonés divalents en $C_{1-18}$ portant des substituants inertes et les radicaux halogénocarbonés divalents en $C_{1-18}$,
X, indépendamment dans chaque cas, est choisi dans l'ensemble constitué par les atomes d'hydrogène et d'halogène et les groupes alkyle en $c_{1-6}$, halogénoalkyle en $C_{1-4}$ et alcoxy en $C_{1-4}$,
r représente un nombre réel positif valant entre 0 et 1, limites comprises,
s représente un nombre réel positif valant entre 0 et 1, limites comprises, et
n représente un nombre réel positif dont la valeur est telle que ledit matériau polymère présente une masse molaire suffisante pour qu'on puisse en faire une membrane possédant des caractéristiques convenables.

**4.** Membrane conforme à la revendication 3, dans laquelle le rapport s/r se situe dans l'intervalle allant de 0,005 à 200.

**5.** Membrane conforme à l'une des revendications 3 et 4, dans laquelle X, indépendamment dans chaque cas, est choisi dans l'ensemble constitué par le groupe méthyle et les atomes de chlore, brome et fluor.

**6.** Membrane conforme à l'une des revendications 1 à 5, dans laquelle ledit tensioactif non-ionique est choisi dans l'ensemble que constituent les tensioactifs non-ioniques de type éthoxylate d'alkylphénol, les tensioactifs non-ioniques de type éthoxylate d'alcool, les tensioactifs non-ioniques de type polyoxypropylèneglycol polyéthoxylé, les tensioactifs non-ioniques de type éther alkylique de polyéthylèneglycol et les tensioactifs non-ioniques fluorés.

**7.** Membrane conforme à l'une des revendications 1 à 6, pour laquelle le flux d'oxygène la traversant vaut au moins environ $3.10^{-6}$ $Ncm^3/cm^2.s.cmHg$.

**8.** Membrane conforme à l'une des revendications 1 à 7, pour laquelle le facteur de séparation de gaz oxygène/azote vaut au moins environ 6 aux environs de 25°C.

**9.** Procédé de séparation d'au moins un composant gazeux d'avec au moins un autre composant gazeux, au sein d'un mélange de gaz, lequel procédé comporte :

A) le fait de mettre un mélange gazeux d'alimentation sous pression en contact avec un côté d'une membrane semi-perméable de séparation de gaz, conforme à l'une des revendications 1 à 8, ladite membrane séparant l'une de l'autre une région sous haute pression, d'un côté de la membrane, et une région sous basse pression, du côté opposé de la membrane;
B) le fait de maintenir une différence de pression entre les deux côtés de la membrane, dans des conditions qui permettent à au moins un composant gazeux du mélange gazeux d'alimentation de traverser sélectivement la membrane, de la région sous haute pression vers la région sous basse pression ;
C) le fait de faire sortir, de la région sous basse pression, le gaz perméé enrichi en au moins un composant gazeux ; et
D) le fait de faire sortir, de la région sous haute pression, le gaz non perméé appauvri en au moins un composant gazeux.

**10.** Procédé permettant de préparer une membrane semi-perméable de séparation de gaz, conforme à l'une des revendications 1 et 3 à 8, lequel procédé comporte :

A) le fait de préparer un mélange comprenant

1) un matériau polymère hydrophobe qui peut être mis sous la forme d'une membrane, ce matériau polymère hydrophobe comportant au moins un polymère choisi dans l'ensemble que constituent les polycarbonates, polyesters, poly(ester carbonate), poly(phénylène éther), polysulfones, polyoléfines, poly(sulfure de phénylène), polyéthers, polyimides fluorés, polystyrènes, poly(éther cétone), poly(éther éther cétone), poly(éther imide) et poly(amide imide),
2) au moins un solvant de ce matériau polymère,
3) au moins un tensioactif non-ionique dont la masse molaire vaut entre environ 200 et environ 10 000 et dont le RHL vaut entre 6,0 et 18,0, et
4) éventuellement, au moins un non-solvant dudit matériau polymère ;

B) le fait de chauffer ce mélange à une température à laquelle celui-ci est fluide, mais suffisamment visqueux, dans des conditions de coulée ou d'extrusion, pour permettre d'en faire une membrane ;
C) le fait d'extruder ou de couler ce mélange fluide en une membrane ;
D) le fait de faire passer cette membrane dans au moins une zone de refroidissement brusque par gaz, dans des conditions telles que le mélange se refroidit et commence à subir une séparation de phases ;
E) le fait de faire passer ladite membrane dans au moins une zone de refroidissement brusque par liquide, qui contient un liquide dans lequel ledit matériau polymère est peu soluble, et où au moins une partie dudit solvant et de l'éventuel non-solvant est enlevée de la membrane ; et
F) le fait de faire passer ladite membrane, en même temps ou ensuite, dans au moins une zone de lavage par liquide, qui contient un liquide dans lequel ledit matériau polymère est peu soluble, et où une partie importante du reste du solvant et de l'éventuel non-solvant est enlevée de la membrane.

**11.** Procédé permettant de préparer une membrane semi-perméable de séparation de gaz, conforme à l'une des revendications 2 à 8, lequel procédé comporte :

A) le fait de préparer un mélange comprenant

1) au moins un polymère choisi dans l'ensemble que constituent les polycarbonates, les polyesters, les poly(ester carbonate) et leurs mélanges,
2) au moins un solvant de ce polymère, et

3) éventuellement, au moins un non-solvant dudit polymère;

B) le fait de chauffer ce mélange à une température à laquelle celui-ci est fluide, mais suffisamment visqueux, dans des conditions de coulée ou d'extrusion, pour permettre d'en faire une membrane ;
C) le fait d'extruder ou de couler ce mélange fluide en une membrane;
D) le fait de faire passer cette membrane dans au moins une zone de refroidissement brusque par gaz, dans des conditions telles que le mélange se refroidit et commence à subir une séparation de phases ;
E) le fait de faire passer ladite membrane dans au moins une zone de refroidissement brusque par liquide, qui contient un liquide dans lequel ledit polymère est peu soluble, et où au moins une partie dudit solvant et de l'éventuel non-solvant est enlevée de la membrane ;
F) le fait de faire passer ladite membrane, en même temps ou ensuite, dans au moins une zone de lavage par liquide, qui contient un liquide dans lequel ledit polymère est peu soluble, et où une partie importante du reste du solvant et de l'éventuel non-solvant est enlevée de la membrane ; et
G) le fait de mettre au moins une surface de la membrane en contact avec un tensioactif non-ionique dont le RHL vaut entre environ 8,0 et environ 17,0.